# EUROPEAN PATENT APPLICATION

(11) **EP 4 372 737 A1**
(43) Date of publication of application: **22.05.2024**
(21) Application number: 23772747.4
(22) Date of filing: 27.09.2023
(51) Int. Cl.: G10L 15/22, G10L 15/26, G10L 15/04, G10L 15/18, G06F 40/30, G06F 3/16

(54) **ELECTRONIC DEVICE, OPERATING METHOD AND STORAGE MEDIUM FOR PROCESSING SPEECH NOT INCLUDING PREDICATE**

(30) Priority: 29.09.2022 KR 20220124423; 21.10.2022 KR 20220136773
(71) Applicant: Samsung Electronics Co., Ltd., Suwon-si, Gyeonggi-do 16677 (KR)
(72) Inventor: KIM, Dongkyu, Suwon-si, Gyeonggi-do 16677 (KR); KIM, Kyungtae, Suwon-si, Gyeonggi-do 16677 (KR); SONG, Gajin, Suwon-si, Gyeonggi-do 16677 (KR); SHIN, Hoseon, Suwon-si, Gyeonggi-do 16677 (KR)
(74) Representative: HGF
(86) International application number: PCT/KR2023/015103
(87) International publication number: WO 2024/072142

(57) **Abstract**

According to an embodiment of the disclosure, an electronic device may include a microphone, a communication circuit, a memory, and a processor. The memory may store instructions. The instructions, when executed by the processor, may cause the electronic device to receive a voice command through the microphone, to determine whether a text corresponding to the voice command is composed of one named entity, to obtain execution information for executing the voice command based on the named entity, and to execute the voice command by using the execution information. The execution information may include domain information indicating an application executing the voice command, or intent information indicating a function of the application requested by the voice command.

## Description

### [Technical Field]

The disclosure relates to an electronic device that processes an utterance not including a predicate, an operating method, and a storage medium thereof.

### [Background Art]

A speech recognition technology refers to a technology of analyzing a user's utterance and determining the meaning of the utterance. A speech recognition technology includes a wake-up technology for the initial recognition of an utterance spoken by a user of the technology, an automatic speech recognition (ASR) technology for converting a spoken utterance into a recognizable or written text, and a natural language understanding technology for extracting meaning from the converted text. Various electronic devices equipped with a voice assistant function for using speech recognition technology to control a device in response to a voice command are being provided.

### Technical Problem

The natural language processing (NLP) system of a voice assistant should be able to understand the user's intent and the domain of the action to be performed. However, as the range of voice assistants expands, it becomes more difficult to achieve this with simple utterances made by the user. Therefore, it is necessary for users to make longer utterances in the form of a predicate, so that the domain can be limited to the content of the utterance, or a specific domain can be included in the utterance. A user may need to make a very precise utterance in order to convey their intent to the voice assistant.

It is in this context that the present invention is derived.

### [Disclosure]

### [Technical Solution]

According to an embodiment, an electronic device may include a microphone, a communication circuit, a memory, and a processor. The memory may store instructions. The memory may store instructions which, when executed by the processor, cause the electronic device to receive a voice command through the microphone. When executed by the processor, the instructions may cause the electronic device to determine whether a text corresponding to the voice command is composed of one named entity. When executed by the processor, the instructions may cause the electronic device to obtain execution information for executing the voice command based on the named entity. The execution information may include domain information indicating an application for executing the voice command, or intent information indicating a function of the application requested by the voice command. When executed by the processor, the instructions may cause the electronic device to execute the voice command using the execution information.

According to an embodiment, an operating method of an electronic device may include receiving a voice command through a microphone of the electronic device. The method may include determining whether a text corresponding to the voice command is composed of one named entity. The method may include obtaining execution information for executing the voice command based on the named entity when the text is composed of one named entity. The execution information may include domain information indicating an application for executing the voice command, or intent information indicating a function of the application requested by the voice command. The method may include executing the voice command using the execution information.

According to an embodiment, a non-transitory computer-readable storage medium may store a program for performing an operating method of an electronic device. The operating method of an electronic device may include receiving a voice command through a microphone of the electronic device. The method may include determining whether a text corresponding to the voice command is composed of one named entity. The method may include obtaining execution information for executing the voice command based on the named entity when the text is composed of one named entity. The execution information may include domain information indicating an application for executing the voice command, or intent information indicating a function of the application requested by the voice command. The method may include executing the voice command using the execution information.

### [Description of Drawings]

FIG. 1 is a block diagram showing a configuration of an electronic device, according to an example.
FIG. 2 is a function block diagram of an electronic device, according to an example.
FIG. 3 is a diagram illustrating execution information obtained by an electronic device, according to an example.
FIG. 4 is a diagram illustrating execution information obtained by an electronic device, according to an example.
FIG. 5 is a flowchart illustrating an operation of an electronic device, according to an example.
FIG. 6 is a diagram illustrating a graphic user interface provided by an electronic device, according to an example.
FIG. 7 is a diagram illustrating a graphic user interface provided by an electronic device, according to an example.
FIG. 8 is a diagram illustrating a graphic user interface provided by an electronic device, according to an example.
FIG. 9 is a diagram illustrating a graphic user interface provided by an electronic device, according to an example.
FIG. 10 is a flowchart illustrating an operation of an electronic device, according to an example.
Fig. 11 is a block diagram illustrating an electronic device 1101 in a network environment 1100 according to various embodiments.
FIG. 12 is a block diagram illustrating an integrated intelligence system, according to an embodiment.
FIG. 13 is a diagram illustrating the form in which relationship information between a concept and an action is stored in a database, according to an embodiment.
FIG. 14 is a view illustrating a user terminal displaying a screen of processing a voice input received through an intelligence app, according to an embodiment.

With regard to description of drawings, the same or similar components will be marked by the same or similar reference signs.

### [Mode for Invention]

Hereinafter, an embodiment of the disclosure will be described more fully with reference to the accompanying drawings to such an extent as to be easily embodied by one skilled in the art. However, the disclosure may be embodied in many different forms and should not be construed as limited to the embodiments set forth herein. With regard to description of drawings, the same or similar components will be marked by the same or similar reference signs. Moreover, in the drawings and related descriptions, descriptions of well-known functions and configurations may be omitted for clarity and conciseness.

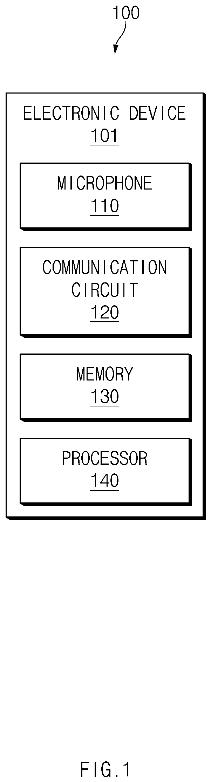

FIG. 1 is a block diagram 100 showing a configuration of an electronic device 101, according to an example.

Referring to FIG. 1, the electronic device 101 may include a microphone 110, a communication circuit 120, a memory 130, and a processor 140, but is not limited thereto. The electronic device 101 may further include other components (e.g., an input device and/or a display) not shown in FIG. 1.

The microphone 110 may receive external sound of the electronic device 101. For example, the microphone 110 may receive a voice command of a user of the electronic device 101. For example, the microphone 110 may receive a user utterance.

The communication circuit 120 may support communication between the electronic device 101 and an external electronic device (e.g., a server). The communication circuit 120 may support transmission and reception of data or signals between the electronic device 101 and an external electronic device. For example, the communication circuit 120 may transmit, to a voice assistant server, a voice command received through the microphone 110 of the electronic device 101. The communication circuit 120 may receive a response for executing a voice command from the voice assistant server. In the disclosure, the response for executing a voice command may be referred to as execution information for executing the voice command. For example, the execution information may include domain information indicating an application executing the voice command, and intent information indicating a function of the application requested by the voice command. Intent information is information indicating an intention of a user. That is, the user's intent is the action that the user would like the voice assistant to perform. The user may express their intent in a number of ways, including (but not limited to) the actual words spoken by the user, the tone of voice of the user, a context in which the words are spoken, and a history relating to previous requests made by the user.

The memory 130 may store one or more instructions for operating the electronic device 101. The memory 130 may store data or information necessary for the operation of the electronic device 101. For example, the memory 130 may store at least one application. For example, the memory 130 may store named entity usage history information in at least one application. For example, the named entity usage history information may include the number of times that a named entity is used, and/or a time point at which a named entity is used.

The processor 140 may be operatively connected to the microphone 110, the communication circuit 120, and the memory 130. The meaning of being operatively connected between components may mean that components are functionally connected or communicatively connected to each other. For example, components thus operatively connected may exchange data with each other.

The processor 140 may execute one or more instructions stored in the memory 130. For example, the processor 140 may provide a voice assistant function by executing one or more instructions stored in the memory 130. The voice assistant function may provide a response to a user's request included in the voice command. In other words, the processor 140 may implement at least part (e.g., automatic speech recognition (ASR) and natural language understanding (NLU)) of functions performed by a voice assistant server by executing one or more instructions stored in the memory 130.

The processor 140 may receive a user's voice command through the microphone 110. The processor 140 may convert the voice command received through the microphone 110 into a text based on ASR. In an embodiment, the processor 140 may determine a domain indicating an application executing a voice command and intent indicating a function of an application requested by the voice command, by analyzing the converted text based on NLU.

The processor 140 may determine whether the text corresponding to a voice command is composed of one named entity. For example , the processor 140 may determine the text corresponding to the voice command is composed of a single named entity without predicate. For example, when the text corresponding to the voice command does not include a predicate and includes one named entity, the processor 140 may determine that the text is composed of one named entity. In this context, a predicate may be used to mean a word or phrase to describe an action to be performed. In other words, the predicate may be a verb, or a phrase including a verb, which represents an intention of the user speaking the words. For example, a predicate may be "play", in the context of playing music or videos. This may represent a user's intention for the voice assistant to play music or video content. This is only an example, provided purely for explanatory reasons, and the invention is not limited to this example.

Throughout the specification, references are made to "one named entity". However, the invention is not limited thereto, and the text corresponding to the voice command may include a single named entity, or more than one named entities. That is, unless otherwise specified, the phrase "one named entity" is not to be interpreted as "a single named entity and no other named entities". Instead, "one named entity" may be interpreted as "a named entity", "one or more named entities", "at least one named entity", or any other interpretation which allows for a plurality of named entities to be present such that the invention is not limited to strictly one named entity.

Throughout the specification, reference is made to texts or voice commands being "composed of" a named entity. In this context, "composed of" means that the named entity is included in the voice command or text. For example, the phrase "when the text is composed of" could equally be written "when the text includes". That is "composed of" can be interpreted as "includes".

In an embodiment, when the text is composed of one named entity, the processor 140 may search for a database based on the named entity. A named entity is a noun uttered by a user to express their intent. For example, if a user says "play music by Adele", the named entities may be "music" and "Adele". The named entities represent the user's intent to receive music by the artist Adele. The term "music" may be described as a domain. The domain may be a type of service or action that the user would like to receive. The database may include public data and personal data. The public data may include a named entity used by the public, such as a named entity of media contents, a location, an organization, or domain specific information (e.g., an Internet-of things (IoT) mode). For example, the public data may be repeatedly updated to the latest data at a specified time point through an external server. That is, the public data may be regularly, frequently, or periodically updated using data provided by an external server.

The personal data may include data specialized to an individual (e.g., a user of the electronic device 101), such as an activity, a pet name, an IoT device name, contact information, or personal media content information. That is, the personal data may include data specific to the user of the electronic device. In an embodiment, the processor 140 may collect a registered named entity as personal data based on a user input received through an input device (e.g., including the microphone 110) of the electronic device 101.

The public data and the personal data may include category information, domain information, and/or intent information related to the named entity.

In an embodiment, on the basis of the named entity usage history in at least one application, the processor 140 may associate a named entity extracted from the named entity usage history in each application with a domain corresponding to each application or intent in which the extracted named entity is used, and store the associated result in a database. Hereinafter, the named entity extracted from the named entity usage history in each application and the domain or intent stored in conjunction with the named entity may also be referred to as "specified named entity information". For example, the specified named entity information may be treated as personal data. For example, when the named entity included in a text corresponds to the named entity included in the specified named entity information, the processor 140 may obtain domain information or intent information included in the specified named entity information.

For example, data stored in the database may comprise not only string information of the named entity, but also the pronunciation string information. In an embodiment, when the processor 140 searches for the database based on the named entity, the processor 140 may perform a search based on a pronunciation string of the named entity as well as a character string of the named entity. The processor 140 may also search for a named entity having a pronunciation string similar to the named entity to be found.

In an embodiment, the processor 140 may obtain execution information for executing a voice command by searching for the database based on the named entity. The execution information may include domain information indicating an application executing a voice command or intent information indicating a function of an application requested by the voice command. For example, the execution information may include category information to which the named entity belongs. For example, the processor 140 may obtain at least one category, at least one domain, and/or at least one intent corresponding to the named entity by searching for the database based on the named entity.

In an embodiment, when a plurality of categories corresponding to the named entity are found based on public data, the processor 140 may obtain ratio information about each category. For example, the ratio information about each category may indicate a ratio at which the named entity is used as each category among the plurality of categories. For example, the ratio information about each category may indicate a probability that the named entity is to be used as each category among the plurality of categories. For example, with respect to a first named entity, two categories of `TV shows' and 'Music' may be found based on the public data. For example, the processor 140 may obtain a ratio used as category `TV shows' and a ratio used as a category 'Music' with respect to the first named entity.

In an embodiment, the processor 140 may determine a category corresponding to the named entity based on the obtained ratio information. For example, the processor 140 may determine a category having the highest ratio as a category corresponding to the named entity. For example, with respect to the first named entity, a ratio at which category `TV shows' is used may be about 60% and a ratio at which category 'Music' is used may be about 40%. In this case, the processor 140 may determine a category corresponding to a first named entity as category `TV shows' based on the ratio for the TV show category being higher than the ratio for the Music category.

In an embodiment, the processor 140 may obtain execution information corresponding to the determined category. For example, when the category of the first named entity is determined to be `TV shows', a first domain (e.g., a first application) may execute a voice command. That is, the first domain or first application may be used to implement the instructions indicated by the voice command uttered by the user. When the category of the first named entity is 'Music', a second domain (e.g., a second application) different from the first domain may execute a voice command. That is, the second domain or second application may be used to implement the instructions issued by the user in the voice command uttered by the user. For example, as the processor 140 determines the category of the first named entity as `TV shows', the processor 140 may obtain domain information indicating a first domain and intent information indicating a function of the first domain. For example, as the processor 140 determines the category of the first named entity as 'Music', the processor 140 may obtain domain information indicating a second domain and intent information indicating a function of the second domain.

In an embodiment, when a plurality of categories corresponding to the named entity are found based on the public data, the processor 140 may provide a user interface for querying a user about a category, to which desired information belongs, from among the plurality of categories. For example, the processor 140 may provide a user interface by displaying a graphic user interface on a display of the electronic device 101. For example, with respect to a first named entity, two categories of 'TV shows' and 'Music' may be found based on the public data. In an embodiment, the processor 140 may provide a user interface for querying a user about a category among 'TV shows' or 'Music', to which desired information belongs, with respect to the first named entity.

In an embodiment, when the plurality of categories corresponding to the named entity are found, and when the processor 140 does not determine that a category corresponding to the named entity is one category, based on the ratio information for each category, the processor 140 may identify a category intended by the user through the user interface. For example, with respect to the first named entity, a ratio at which the category 'TV shows' is used may be about 52%, and a ratio at which the category 'Music' is used may be about 48%. In this case, because a usage ratio difference between the two categories is within a specified range (e.g., 5%), the processor 140 may not determine a category intended by the user. In an embodiment, the processor 140 may provide a user interface for querying a user about a category among 'TV shows' or 'Music', to which desired information belongs. The processor 140 may obtain execution information corresponding to a category selected in response to a user input to the user interface, or a voice command issued by the user in response to a query provided by the user interface.

In an embodiment, when a plurality of categories corresponding to the named entity are found based on public data, and when it is possible to specify one category among the plurality of categories based on personal data, the processor 140 may obtain execution information corresponding to one specific category. For example, when the search result based on the personal data indicates that there is only one category corresponding to the named entity, the processor 140 may specify the corresponding category as a category corresponding to the named entity. For example, with respect to the first named entity, two categories of 'TV shows' and 'Music' may be found based on the public data, and only category 'TV shows' may be found based on personal data. In this case, the processor 140 may specify a category corresponding to the first named entity as 'TV shows', and may obtain execution information corresponding to 'TV shows'.

For example, when the search result based on the personal data indicates that there are a plurality of categories corresponding to the named entity, the processor 140 may specify a category having the highest usage count among the plurality of categories as a category corresponding to the named entity. For example, with respect to the first named entity, two categories of 'TV shows' and 'Music' may be found based on personal data, a usage count of the 'TV shows' category may be two, and a usage count of the Music' category may be one. In this case, the processor 140 may specify a category corresponding to the first named entity as 'TV shows', and may obtain execution information corresponding to 'TV shows'.

In an embodiment, the processor 140 may execute a voice command by using the obtained execution information. For example, the processor 140 may execute the voice command by using the domain indicated by the obtained domain information. For example, the processor 140 may execute a voice command by executing a function of a specific domain indicated by the obtained intent information. In the disclosure, the fact that the electronic device 101 or the processor 140 executes a voice command may refer to performing an action corresponding to the voice command, or executing a function corresponding to the user's intent.

In an embodiment, the processor 140 may determine whether an action performed by executing the voice command corresponds to the intent of the user of the electronic device 101. For example, when the processor 140 receives negative feedback (e.g., button input 'Cancel' or 'Back', or a re-utterance of the same voice command) from the user, the processor 140 may determine that an action performed by the electronic device 101 through the execution of a voice command does not correspond to the user's intent. For example, when the processor 140 receives positive feedback (e.g., a voice command utterance for performing an action following the performed action, a non-response that allows the action to remain performed, or an utterance including a positive word such as "thank you" or "nice job") from the user, the processor 140 may determine that the action performed by the electronic device 101 through the execution of the voice command corresponds to the user's intent.

In an embodiment, when the action performed by the execution of the voice command corresponds to the user's intent of the electronic device 101, the processor 140 may store information used to execute the voice command in a database as personal data. For example, the information used to execute the voice command may include at least one of a named entity included in the voice command, a category corresponding to the named entity, the number of times that the named entity is uttered, a domain in which an action is performed, or intent corresponding to an action performed in the domain. For example, the information used to execute the voice command may be stored while the named entity operates in conjunction with other information. Accordingly, when the processor 140 receives a voice command including the same named entity, the processor 140 may obtain information (e.g., a category, the number of utterances, a domain, and/or intent) related to the named entity stored in a database. For example, the processor 140 may perform an action corresponding to a voice command based on the obtained domain information or intent information.

For example, there may be no data found from the database based on the named entity. That is, the database may not contain any data corresponding to the named entity. In this case, the processor 140 may provide a user interface including a popularly used intent list. The intent list may include at least one intent. The at least one intent included in the intent list may correspond to a function of at least one domain. The at least one intent included in the intent list may not be related to the named entity. For example, the at least one intent included in the intent list may be obtained by extracting a domain or intent, which is most frequently used by voice assistant service users (or electronic devices that provide a voice assistant service), from among domains or pieces of intent supported by the electronic device 101. The processor 140 may perform an action corresponding to the intent selected in response to a user input to a user interface.

For example, data found from the database based on the named entity may include pieces of intent. In this case, the processor 140 may provide a user interface including an intent list associated with the named entity. The intent list may include at least one intent associated with the named entity. The at least one intent included in the intent list may correspond to a function of at least one domain related to the named entity. The processor 140 may perform an action corresponding to an intent selected in response to a user input to the user interface.

In an embodiment, when a text corresponding to the received voice command is composed of one named entity, the processor 140 may determine whether a domain or intent is capable of being specified, based on the text. For example, when there is only one domain or intent corresponding to the named entity included in a text, the processor 140 may determine that the domain or intent is capable of being specified, based on the text. For example, when there are a plurality of domains or pieces of intent corresponding to the named entity included in a text, the processor 140 may determine that the domains or the pieces of intent is incapable of being specified, based on the text.

In an embodiment, when the processor 140 is capable of specifying a domain or intent based on a text, the processor 140 may perform an action corresponding to a voice command based on the specified domain or intent. In an embodiment, when the processor 140 is incapable of specifying a domain or intent based on a text, the processor 140 may specify the domain or intent using execution information, which is obtained by searching for a database, based on a named entity included in the text. In an embodiment, the processor 140 may perform an action corresponding to a voice command based on the domain or intent specified by using the execution information.

In an embodiment, through an input device of the electronic device 101, the processor 140 may receive a user input for specifying a domain, in which an action is performed on at least one named entity, or intent in the domain. That is, a user input may be received through an input device of the electronic device. The user input may specify a domain in which an action is to be performed on at least one named entity, or an intent of the user. When a voice command including one among the at least one named entity is received based on or in addition to, the received user input, the processor 140 may be configured to perform an action corresponding to the voice command depending on the specified domain or specified intent. After the configuration, when receiving a voice command, in which the specified domain or intent is composed of one named entity, through the microphone 110, the processor 140 may perform an action corresponding to a voice command depending on the specified domain or intent on the named entity.

For example, the processor 140 may provide a user interface for specifying a domain, in which an action is performed on at least one named entity. The at least one named entity may include a first named entity and a second named entity. For example, the processor 140 may receive a first user input for assigning, as a first domain (e.g., a first application), a domain in which an action corresponding to a voice command is performed on the first named entity. For example, the processor 140 may receive a second user input for assigning, as a second domain (e.g., a second application, where the first application and the second application are different applications), a domain in which an action corresponding to a voice command is performed on the second named entity. The processor 140 may set domains to perform actions corresponding to voice commands on the first named entity and the second named entity based on a first user input and a second user input, respectively. After, when the processor 140 receives a voice command including the first named entity, the processor 140 may perform an action corresponding to the received voice command using the first domain. Furthermore, when the processor 140 receives a voice command including the second named entity, the processor 140 may perform an action corresponding to the received voice command using the second domain.

For example, in response to a user input, the processor 140 may store information on the specified domain or intent with respect to at least one named entity in a database. For example, the processor 140 may associate a named entity with the specified domain or intent so as to correspond to the named entity and may store the associated result in the database.

According to an embodiment, the electronic device 101 may build a database capable of detecting a category, domain, and/or intent corresponding to the named entity, may identify the domain or intent desired by a user even for a user utterance without a predicate using a database search based on the named entity, and may perform an action corresponding to the user's intent. Even when the user's intent is unclear, the electronic device 101 according to an embodiment may identify intent information related to a user utterance and may provide the intent information to the user. Even when there are a plurality of categories corresponding to the user utterance, the electronic device 101 according to an embodiment may identify the domain or intent desired by the user by using personal data and may perform an action corresponding to the user's intent. Advantageously, even if the user does not specify a domain or a predicate in their utterance, an action corresponding to the user's intent can still be performed. That is, the user can make short or incomplete utterances and the electronic device can deduce the user's intent and perform the intended action.

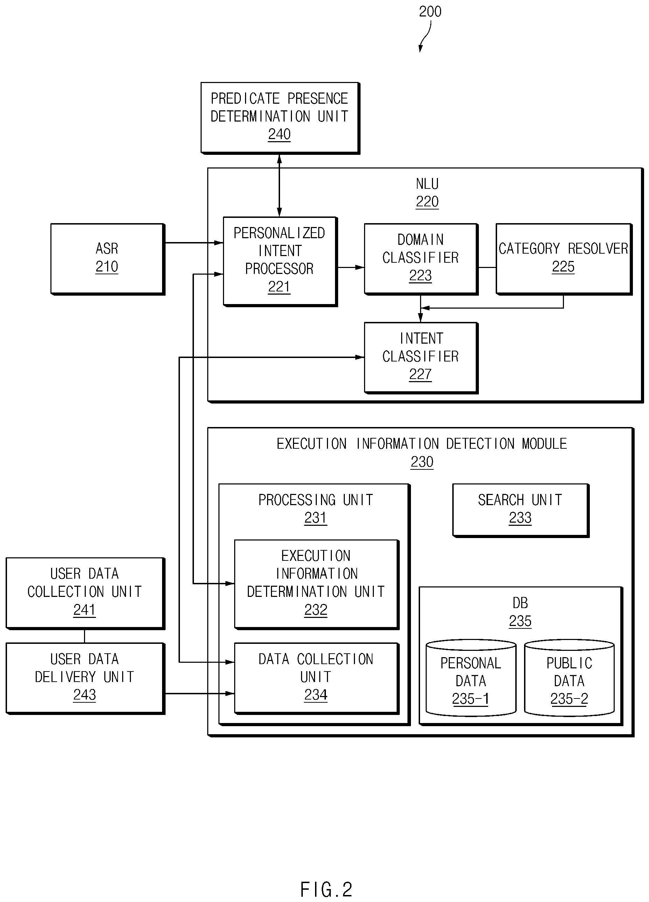

FIG. 2 is a function block diagram 200 of an electronic device, according to an example.

An electronic device (e.g., the electronic device 101 of FIG. 1) according to an example may include at least some of the modules (or units) shown in FIG. 2. Each module (or unit) shown in FIG. 2 may be a set of instructions for implementing each function. Operations of each module described below may be performed by at least a hardware component (e.g., the processor 140 in FIG. 1) of the electronic device 101 shown in FIG. 1. For example, the electronic device 101 may include an ASR module 210, an NLU module 220, an execution information detection module 230, a predicate presence determination unit 240, a user data collection unit 241, and/or a user data delivery unit 243.

The ASR module 210 may convert a user's voice command received through a microphone (e.g., the microphone 110 of FIG. 1) of the electronic device 101 into a text.

The NLU module 220 may determine a domain or intent based on the converted text. The domain may indicate an application that executes a voice command. The intent may indicate a function of an application requested by the voice command. The NLU module 220 may include a personalized intent processor 221, a domain classifier 223, a category resolver 225, or an intent classifier 227.

The personalized intent processor 221 may determine whether the user's utterance is an utterance without a predicate, by calling or referring to or using the predicate presence determination unit 240. The predicate presence determination unit 240 may determine whether a text converted from the received voice command includes a predicate. The predicate presence determination unit 240 may determine whether the text converted from the received voice command is composed of or comprises only the named entity without a predicate. The predicate presence determination unit 240 may determine whether the text converted from the received voice command is composed of or comprises the named entity without a predicate. Only when the text corresponding to the voice command is composed of or comprises a single named entity without a predicate, the personalized intent processor 221 may obtain execution information for executing a voice command through the execution information detection module 230. The personalized intent processor 221 may obtain the execution information for executing a voice command, by querying the execution information detection module 230 or an execution information determination unit 232 of the execution information detection module 230. For example, the execution information may include category information, domain information, intent information, and/or action information. The action information may be information indicating an action corresponding to intent or a function of a domain (e.g., an application) indicated by the intent. When querying the execution information detection module 230 or the execution information determination unit 232, the personalized intent processor 221 may deliver a named entity included in a text.

When the user's utterance includes only one named entity without a predicate and a domain executing a voice command is clear (e.g., when a domain corresponding to a named entity is determined (or specified) as one), the personalized intent processor 221 may allow the electronic device 101 to execute the voice command by using the corresponding domain. When the user's utterance includes only one named entity without a predicate and a domain executing a voice command is unclear (e.g., when there are a plurality of domains corresponding to the named entity), the personalized intent processor 221 may deliver the named entity to the execution information detection module 230 and may obtain the execution information for executing a voice command from the execution information detection module 230. The electronic device 101 may perform an action corresponding to the user's intent using the obtained execution information.

When there is execution information obtained from the execution information detection module 230 or the execution information determination unit 232 even though the user's utterance includes a predicate, the personalized intent processor 221 may deliver the execution information to the domain classifier 223, the category resolver 225, and/or the intent classifier 227 and may allow the execution information to the domain classifier 223, the category resolver 225, and/or the intent classifier 227 to use the execution information.

The domain classifier 223 is a sub-module of the NLU module 220. The domain classifier 223 may deliver an utterance or a text corresponding to the utterance to each domain processor. For example, a domain may refer to an application area such as a phone, a message, or a gallery, or an application area such as media contents.

The category resolver 225 may determine a detailed domain (e.g., an application) by the domain classifier 223. However, for example, as in being determined as the application area such as media contents by the domain classifier 223, the detailed domain may not be determined. In this case, the category resolver 225 may need to determine the detailed domain in which an utterance is to be processed. For this determination, the category resolver 225 may use category information or domain information, which is obtained through the personalized intent processor 221.

The intent classifier 227 may classify the user's intent by analyzing an utterance. For example, the intent classifier 227 may identify the user's intent by performing syntactic analysis and/or semantic analysis on a text corresponding to the utterance. The intent classifier 227 may determine the intent of an utterance of which the intent is not identified by the personalized intent processor 221. For example, when the named entity is not a specified named entity for which execution information is detected through the execution information detection module 230, the intent of the utterance including the named entity may not be identified by the personalized intent processor 221. The intent classifier 227 may use an algorithm capable of processing computations that are more complex and larger than a classification algorithm used by the personalized intent processor 221.

When the action performed in response to the user's utterance corresponds to the user's intent, the intent classifier 227 may deliver utterance usability information to the execution information detection module 230 or a data collection unit 234. The utterance usability information may be the information used to execute the voice command and may include at least one of a named entity included in the voice command, a category corresponding to the named entity, the number of times that the named entity is uttered, a domain in which an action is performed, or intent corresponding to an action performed in the domain.

The execution information detection module 230 may include a processing unit 231, a search unit 233, and a DB 235. The processing unit 231 may include the execution information determination unit 232 and the data collection unit 234. The execution information determination unit 232 may search for the DB 235 through the search unit 233 based on the named entity delivered from the personalized intent processor 221. The search unit 233 may perform a search by using character string information and pronunciation string information of the named entity. The DB 235 may include personal data 235-1 and public data 235-2. The personal data 235-1 and the public data 235-2 may be collected by the data collection unit 234 in different ways. Data stored in the DB 235 may also include the pronunciation string information of the named entity.

The data collection unit 234 may repeatedly update the public data 235-2 to the latest data at a specified time point. The public data 235-2 may include a named entity used by the public, such as a named entity of media contents, a location, an organization, or domain specific information (e.g., an IoT mode). For example, the public data 235-2 may include a named entity, pronunciation string information of the named entity, and/or category information.

The data collection unit 234 may collect the personal data 235-1 from the NLU module 220 or the user data delivery unit 243. The personal data 235-1 may include data specialized or specific to an individual (e.g., a user of the electronic device 101), such as an activity, a pet name, an IoT device name, contact information, or personal media content information. The personal data 235-1 may include the user's app usage history, or the user's app usage history for each time and/or location. For example, the personal data 235-1 may be collected by the user data collection unit 241 in the electronic device 101. The user data delivery unit 243 may deliver, to the data collection unit 234, the personal data 235-1 collected by the user data collection unit 241. For example, the data collection unit 234 may collect the personal data 235-1 by receiving utterance usability information from the NLU module 220. For example, the personal data 235-1 may include a user identifier, a named entity, pronunciation string information of the named entity, category information, utterance count information, preference information, domain information, and/or intent information.

For example, when receiving a user input for registering or changing data, the user data collection unit 241 may collect the data. For example, when receiving a user input for registering or changing a pet name from an IoT pet service, the user data collection unit 241 may collect pet name information.

For example, when receiving a user input for displaying a preference for content, the user data collection unit 241 may collect information about the content. For example, when the content has been played for a long time (e.g., a threshold time or more), the user data collection unit 241 may collect information about the played content.

For example, when receiving a user input for selecting an intent from an intent list including pieces of intent information provided by a voice assistant, the user data collection unit 241 may collect information related to the selected intent. For example, even when the execution information determination unit 232 specifies a category corresponding to the named entity, the personalized intent processor 221 may fail to determine the action to be performed. In this case, the personalized intent processor 221 may provide a user interface for allowing a user to select a desired action. For example, when a user utters "Gangnam station", the execution information determination unit 232 may recognize that the named entity of 'Gangnam station' belongs to category 'location'. The execution information determination unit 232 may deliver, to the personalized intent processor 221, information indicating that 'Gangnam station' belongs to category 'location'. Because there are a plurality of actions capable of being performed by using information of category 'location' of "Gangnam station", the personalized intent processor 221 may provide a plurality of action candidates through a user interface. For example, the personalized intent processor 221 may provide the user interface including "tell me a restaurant near 'Gangnam station' in a first app", 'give me directions to "Gangnam station" in a second app', and `tell me a restaurant near "Gangnam station" in the second app'. The personalized intent processor 221 may perform the selected action in response to receiving a user input for selecting one of the provided plurality of action candidates. The user data collection unit 241 may collect information (e.g., domain information or intent information for executing the selected action) about the selected action in response to receiving a user input for selecting one of the provided plurality of action candidates.

For example, when receiving a user input for specifying a domain corresponding to the named entity, the user data collection unit 241 may collect the named entity and execution information corresponding to the named entity. For example, the user data collection unit 241 may collect execution information corresponding to the specified named entity based on an app usage history for each time and for each place. The execution information may include domain information, intent information, or action information. For example, the user data collection unit 241 may transmit a specified named entity-execution information pair to the data collection unit 234. The data collection unit 234 may store the specified named entity-execution information pair in the DB 235. The specified named entity-execution information pair may be stored as the personal data 235-1 or as separate data.

The execution information determination unit 232 may be called by the personalized intent processor 221. The execution information determination unit 232 may search for the DB 235 through the search unit 233 based on a word or phrase included in a text corresponding to the user's utterance. For example, the execution information determination unit 232 may search for the DB 235 through the search unit 233 based on a named entity included in the text. For example, the execution information determination unit 232 may determine execution information for performing an action corresponding to an utterance by determining a domain or intent for performing the action corresponding to the utterance as well as tagging information (e.g., category information) indicating a category to which the named entity belongs. The execution information determination unit 232 may deliver the determined execution information to the personalized intent processor 221 and then may allow the personalized intent processor 221 to perform an action corresponding to the utterance spoken by the user using the execution information.

For example, when there are two or more categories corresponding to the named entity found in the DB 235, the execution information determination unit 232 may not determine a category to which the utterance belongs. In this case, the execution information determination unit 232 may return ratio information about each category to the personalized intent processor 221. For example, the ratio information about each category may indicate a ratio at which the named entity is used as each category among the plurality of categories. For example, when not specifying a category based on ratio information about each category, the personalized intent processor 221 may provide a user interface for querying a user about a category, to which the desired information belongs, from among the plurality of categories.

For example, when an input for selecting a specific domain or an utterance input clearly includes a domain such as "Play 'A' in the first app," is received through the user interface, the user data collection unit 241 may collect usability information about named entity 'A'. For example, the usability information about named entity 'A' may include domain information of `first app' and intent information of `play'. The usability information of a person (a user of the electronic device 101) collected by the user data collection unit 241 may be stored as the personal data 235-1 of the DB 235 through the data collection unit 234. After the personal data 235-1 has been added, the execution information determination unit 232 may determine the user's intent for the same named entity by using the added personal data 235-1.

For example, when there is no personal usability information about the named entity, the execution information determination unit 232 may return, to the personalized intent processor 221, pieces of possible category information found based on the public data 235-2 and ratio information about each category. For example, when the personal usability information about the named entity is added, the execution information determination unit 232 may determine the domain or intent desired by a user by combining the public data 235-2 and the personal data 235-1. The execution information determination unit 232 may return, to the personalized intent processor 221, execution information including meta information for performing an action corresponding to the utterance together with the determined domain or intent information. The personalized intent processor 221 may perform an action corresponding to the user's intent by using execution information.

The above example illustrates that the electronic device 101 includes all of the modules shown in FIG. 2, but is not limited thereto. According to various examples, the electronic device 101 may include only a part of or some of the modules shown in FIG. 2.

For example, the ASR module 210, the NLU module 220, the predicate presence determination unit 240, the user data collection unit 241, and the user data delivery unit 243 may be implemented in the electronic device 101. The execution information detection module 230 may be implemented as a server outside the electronic device 101. In this case, the electronic device 101 may communicate with the execution information detection module 230 through the communication circuit 120. The personalized intent processor 221 of the electronic device 101 may query the execution information detection module 230 through the communication circuit 120 and may receive a response.

As another example, the user data collection unit 241 and the user data delivery unit 243 may be implemented in the electronic device 101. The ASR 210, the NLU 220, and the predicate presence determination unit 240 may be implemented as a first server external to the electronic device 101. The execution information detection module 230 may be implemented as a second server outside the electronic device 101. In this case, the electronic device 101 may communicate with the first server through the communication circuit 120 and may transmit a voice command received through the microphone 110 to the first server through the communication circuit 120. The electronic device 101 may directly communicate with the second server through the communication circuit 120 or may indirectly communicate with the second server through the first server. The personalized intent processor 221 of the first server may query the execution information detection module 230, may receive a response, and may process the response to be provided to the electronic device 101. The electronic device 101 may receive the processed response from the first server and may execute the voice command based on the received response.

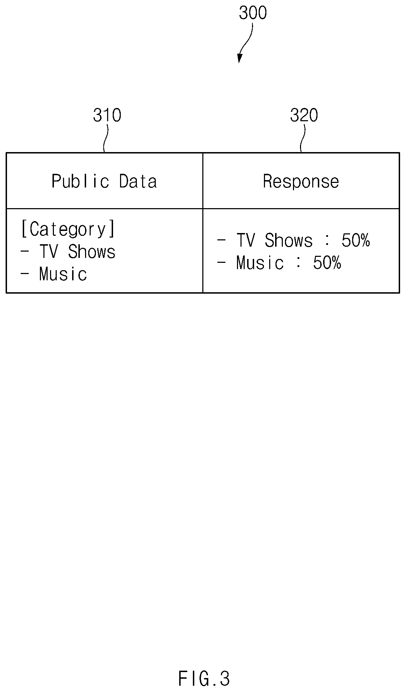

FIG. 3 is a diagram 300 illustrating execution information obtained by an electronic device, according to an example. Operations of an electronic device (e.g., the electronic device 101 of FIG. 1) described below may be performed by, for example, a processor (e.g., the processor 140 of FIG. 1) of the electronic device. Public data 310 of FIG. 3 may correspond to the public data 235-2 of FIG. 2. A response 320 in FIG. 3 may be a response returned by an execution information determination unit (e.g., the execution information determination unit 232 of FIG. 2) to a personalized intent processor (e.g., the personalized intent processor 221 in FIG. 2).

For example, the electronic device 101 may receive a voice command that includes a first named entity and does not include a predicate. The electronic device 101 may search for a DB (e.g., the DB 235 in FIG. 2) based on the first named entity. For example, the public data 310 related to the first named entity may be present in the DB 235, and personal data related to the first named entity may not be present in the DB 235. According to the public data 310, two categories corresponding to the first named entity may be category 'TV shows' and category 'Music'.

The electronic device 101 may fail to determine a category, to which information desired by a user belongs, from among category 'TV shows' and category 'Music' with respect to the first named entity. In this case, the electronic device 101 may obtain usage ratio information about each category. For example, the electronic device 101 may obtain ratio information about each category indicating a ratio at which the first named entity is used as category 'TV shows', and a ratio at which the first named entity is used as category 'Music'. For example, the electronic device 101 may obtain the response 320 as execution information about the first named entity. The response 320 may include category information corresponding to the first named entity. When there are a plurality of categories corresponding to the first named entity, the response 320 may further include ratio information about each category. The response 320 may include domain information or intent information according to each category.

The electronic device 101 may determine the user's intent based on the ratio information about each category. As in the example of FIG. 3, when the ratio at which the first named entity is used as category 'TV shows' is the same as the ratio at which the first named entity is used as category 'Music', the electronic device 101 may provide a user interface for querying information of a desired category among category 'TV shows' and category 'Music' with respect to the first named entity. For example, the electronic device 101 may receive a user input for selecting category 'TV shows' or category 'Music'. The electronic device 101 may determine a category selected in response to a user input as a category corresponding to the first named entity. The electronic device 101 may perform an action corresponding to the user's intent by using domain information and intent information according to the determined category.

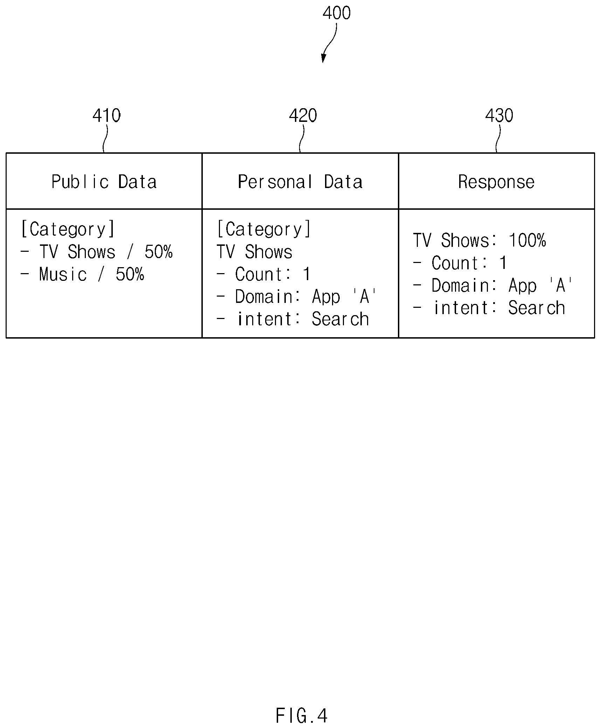

FIG. 4 is a diagram 400 illustrating execution information obtained by an electronic device, according to an example. Operations of an electronic device (e.g., the electronic device 101 of FIG. 1) described below may be performed by, for example, a processor (e.g., the processor 140 of FIG. 1) of the electronic device. Public data 410 of FIG. 4 may correspond to the public data 235-2 of FIG. 2. Personal data 420 of FIG. 4 may correspond to the personal data 235-1 of FIG. 2. A response 430 in FIG. 4 may be a response returned by an execution information determination unit (e.g., the execution information determination unit 232 of FIG. 2) to a personalized intent processor (e.g., the personalized intent processor 221 in FIG. 2).

For example, the electronic device 101 may receive a voice command that includes a first named entity and does not include a predicate. The electronic device 101 may search for a DB (e.g., the DB 235 in FIG. 2) based on the first named entity. For example, the public data 410 and the personal data 420 related to the first named entity may be present in the DB 235. According to the public data 410, two categories corresponding to the first named entity may be category 'TV shows' and category 'Music'. The ratio information about each category may be category 'TV shows' of about 50% and category 'Music' of about 50%. For example, the ratio information about each category may indicate a probability that the named entity is to be used as each category among the plurality of categories. According to the personal data 420, the first named entity is used as category 'TV shows', the number of times that the first named entity has been uttered (or used) in category 'TV shows' is 1, and app 'A' has performed a search by using the first named entity as a search word.

The electronic device 101 may obtain a response 430 as execution information for the first named entity. The response 430 may be determined by combining the public data 410 and the personal data 420. According to the public data 410, a category corresponding to the first named entity may not be specified as one. That is, there may not be a specific single category which corresponds to the first named entity. The first named entity may not belong to a single category, but to two or more categories. When the public data 410 and the personal data 420 are combined, a category corresponding to the first named entity may be specified as 'TV shows'. The response 430 may include category information corresponding to the first named entity. When the category corresponding to the first named entity is determined based on the personal data 420, the response 430 may include information about the number of times that the first named entity is uttered as the determined category, domain information for executing a voice command including the first named entity, and intent information. The electronic device 101 may perform an action corresponding to the user's intent by using the domain information and intent information included in the response 430. For example, the electronic device 101 may perform a search using the first named entity as a search word in app 'A'.

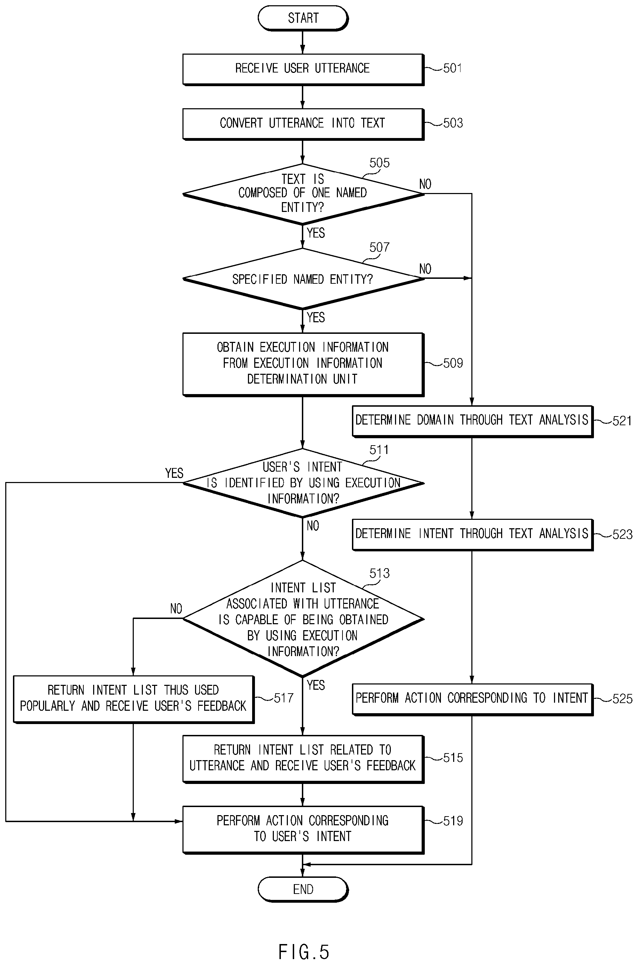

FIG. 5 is a flowchart 500 illustrating an operation of an electronic device, according to an example. Hereinafter, each of the operations shown in an embodiment may be sequentially performed, but are not necessarily sequentially performed. For example, the order of the operations may be changed, and at least two operations may be performed in parallel. Operations of an electronic device (e.g., the electronic device 101 of FIG. 1) described below may be performed by, for example, a processor (e.g., the processor 140 of FIG. 1) of the electronic device.

In operation 501, the electronic device 101 may receive a user utterance through a microphone (e.g., the microphone 110 in FIG. 1). An utterance may be one or more words spoken by the user. The utterance may be a type of user input into the electronic device to cause the electronic device to perform one or more functions or operations.

In operation 503, the electronic device 101 may convert the received utterance into a text. For example, operation 503 may be performed by the ASR module 210 of FIG. 2.

In operation 505, the electronic device 101 may determine whether the converted text is composed of, comprises, contains or includes one named entity. That is, the electronic device may determine whether there is a named entity included in the converted text. That is, the electronic device may identify a named entity in the converted text.

Throughout the specification, where reference is made to a converted text being "composed of" a feature, it is intended to mean that the feature is provided in the converted text. The converted text may additionally include other words or features. That is, the converted text is not limited to containing just the specified feature. The converted text may include the specified feature along with other words or features. The converted text can equally be said to include, comprise or contain the feature, such as the named entity. That is, the converted text may be composed of, contain, comprise or include the named entity. This is not an exhaustive list, and other synonyms to indicate that the named entity is provided in the converted text can be used.

For example, the electronic device 101 may determine whether the text includes only the named entity without a predicate. That is, the electronic device may determine whether the converted text includes the determined named entity but does not include a predicate. For example, operation 505 may be performed by the personalized intent processor 221 of FIG. 2 or the predicate presence determination unit 240 called by the personalized intent processor 221. When the electronic device 101 determines that the text is not composed of a single named entity, the electronic device 101 may perform operation 521, operation 523, and operation 525. When the electronic device 101 determines that the text is composed of one named entity, the electronic device 101 may perform operation 507.

In operation 507, the electronic device 101 may determine whether the named entity constituting a text is a specified named entity. For example, the electronic device 101 may query an execution information determination unit regarding whether the named entity constituting a text is the specified named entity. The execution information determination unit may be the execution information determination unit 232 of FIG. 2. The specified named entity may be referred to as a "named entity" for obtaining corresponding execution information by the execution information determination unit 232. The execution information may include domain information indicating an application executing an utterance (or a voice command) or intent information indicating a function of the application requested by the utterance. When the electronic device 101 determines that the named entity constituting the text is the specified named entity, the electronic device 101 may perform operation 509. When the electronic device 101 determines that the named entity constituting the text is not the specified named entity, the electronic device 101 may perform operation 521, operation 523, and operation 525.

In operation 521, the electronic device 101 may determine a domain corresponding to a text through text analysis. In operation 523, the electronic device 101 may determine a user's intent corresponding to the text through text analysis. For example, the electronic device 101 may perform syntactic analysis and/or semantic analysis by synthesizing the named entity and/or predicate included in the converted text. For example, operation 521 may be performed by the domain classifier 223 and the category resolver 225 of FIG. 2. Operation 523 may be performed by, for example, the intent classifier 227 of FIG. 2. In operation 525, the electronic device 101 may perform an action corresponding to the intent determined in operation 523.

For example, operation 509 and operations following operation 509 may be performed by the personalized intent processor 221 of FIG. 2.

In operation 509, the electronic device 101 may obtain execution information from the execution information determination unit 232. For example, the execution information determination unit 232 may obtain execution information corresponding to the specified named entity found from a database (e.g., the DB 235 in FIG. 2) based on the specified named entity.

In operation 511, the electronic device 101 may determine whether the user's intent is identified by using the obtained execution information. When the user's intent is identified by using the execution information, the electronic device 101 may perform operation 519. For example, when the electronic device 101 is capable of specifying a domain and intent using the execution information, the electronic device 101 may determine that the user's intent is identified. For example, when domain information or intent information included in the execution information includes one domain or one intent, the electronic device 101 may specify the domain or intent.

When the user's intent is not identified using the execution information, the electronic device 101 may perform operation 513. For example, when the electronic device 101 is incapable of specifying (or unable to identify) the domain and intent using the execution information, the electronic device 101 may determine that the user's intent is not identified. For example, when the domain information or intent information included in the execution information includes a plurality of domains, or when the domain information or intent information includes pieces of intent of the corresponding domain, even when it includes one domain, the electronic device 101 may fail to identify or specify the domain or intent.

In operation 513, the electronic device 101 may determine whether an intent list associated with an utterance is capable of being obtained using the execution information. For example, when the intent information included in the execution information is related to the named entity, the electronic device 101 may determine that an intent list associated with an utterance is capable of being obtained. For example, when the intent information included in the execution information is not related to the named entity, the electronic device 101 may determine that an intent list associated with an utterance is incapable of being obtained. When the electronic device 101 is capable of obtaining the intent list related to the utterance, the electronic device 101 may perform operation 515. When the electronic device 101 is incapable of obtaining the intent list related to the utterance, the electronic device 101 may perform operation 517.

In operation 515, the electronic device 101 may return (or provide) the intent list related to the utterance to a user and may receive the user's feedback. For example, the user's feedback may include a user input for selecting one among at least one intent included in the intent list associated with the utterance. The electronic device 101 may determine the intent selected in response to the user input as the user's intent.

In operation 517, the electronic device 101 may return (or provide) the intent list thus used popularly (for example, an intent list based on frequently used user intentions, an intent list commonly used, or a predetermined intent list) to the user and may receive the user's feedback. The intent list thus used popularly may be different from the intent list related to the utterance. For example, the user's feedback may include a user input for selecting one among at least one intent included in the intent list thus used popularly. For example, the user's feedback may include an utterance input including a specific domain and/or specific intent. The electronic device 101 may determine the user's intent by using the intent selected in response to the user input or the domain or intent specified in response to the utterance input.

In operation 519, the electronic device 101 may perform an action corresponding to the user's intent. For example, the electronic device 101 may execute an action corresponding to the user's intent based on the domain and/or intent determined according to the process of FIG. 5.

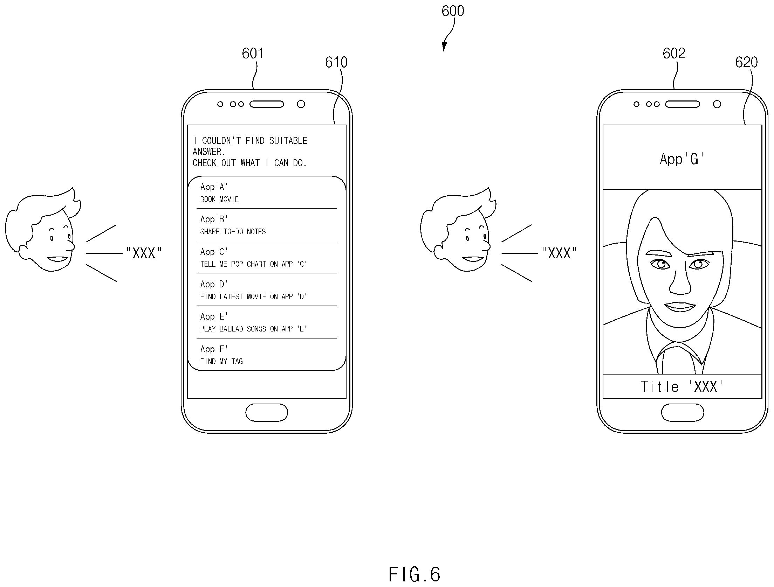

FIG. 6 is a diagram 600 illustrating a graphic user interface provided by an electronic device, according to an example. A second electronic device 602 shown in FIG. 6 may correspond to the electronic device 101 in FIG. 1. For example, an operation of the second electronic device 602 described later may be performed by a processor (e.g., the processor 140 in FIG. 1). A first electronic device 601 shown in FIG. 6 may be an electronic device for comparison with the second electronic device 602. The first electronic device 601 may be an electronic device according to the prior art.

For example, the first electronic device 601 and the second electronic device 602 may receive the same utterance of "XXX" from a user. For example, the utterance received by the first electronic device 601 and the second electronic device 602 may be an utterance composed only of a named entity without a predicate. For example, "XXX" may be a content name. Referring to FIG. 6, even though both devices receive the same utterance, the first electronic device 601 and the second electronic device 602 may provide different pieces of information.

For example, in a case of an utterance without a predicate, the first electronic device 601 may fail to determine the intent, domain, or category of the utterance. For example, the first electronic device 601 may not determine that "XXX" is included in category 'Media Contents'. Accordingly, the first electronic device 601 has no choice but to provide a first graphic user interface 610 including a popular utterance hint list (or intent list) unrelated to the received utterance. For example, the first graphic user interface 610 may include information indicating an utterance (or intent) executable by at least one domain. For example, at least one domain or intent indicated by information included in the first graphic user interface 610 may not be related to a named entity called "XXX" or category 'Media Contents'.

For example, even when an utterance does not include a predicate, the second electronic device 602 may search for a database including public data and personal data based on a named entity included in the utterance, may obtain execution information, and may perform an action corresponding to the user's intent by using the execution information. For example, the second electronic device 602 may obtain the execution information indicating that the named entity of "XXX" is included in category 'Media Contents' and a search operation is performed by app 'G' by using "XXX" as a search term. The second electronic device 602 may search for "XXX" in app 'G' by using this execution information.

The second electronic device 602 may provide a second graphic user interface 620 indicating a result of performing an action corresponding to the user's intent by using the execution information. For example, the second graphic user interface 620 may indicate a result of searching for "XXX" in app 'G'.

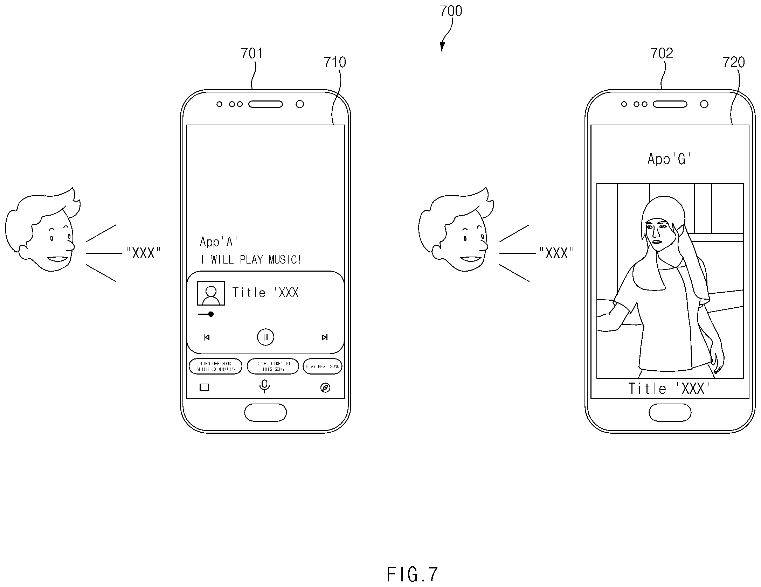

FIG. 7 is a diagram 700 illustrating a graphic user interface provided by an electronic device, according to an example. A second electronic device 702 shown in FIG. 7 may correspond to the electronic device 101 in FIG. 1. For example, an operation of the second electronic device 702 described later may be performed by a processor (e.g., the processor 140 in FIG. 1). A first electronic device 701 shown in FIG. 7 may be an electronic device for comparison with the second electronic device 702. The first electronic device 701 may be an electronic device according to the prior art.

For example, the first electronic device 701 and the second electronic device 702 may receive the same utterance of "XXX" from a user. For example, the utterance received by the first electronic device 701 and the second electronic device 702 may be an utterance composed only of a named entity without a predicate. For example, "XXX" may be a content name. Referring to FIG. 7, even though both devices receive the same utterance, the first electronic device 701 and the second electronic device 702 may provide different pieces of information.

For example, when there are a plurality of categories corresponding to a named entity, the first electronic device 701 may determine a category corresponding to the named entity depending on a predetermined priority (or ordering) regardless of a preference of an individual (a user of an electronic device) and may determine a domain or intent depending on the determined category. For example, when category 'TV shows' and category 'Music' are present with respect to the named entity "XXX", the first electronic device 701 may determine a category corresponding to the named entity as category 'Music' regardless of the preference of the first electronic device 701 or the user of the first electronic device 701. For example, as the first electronic device 701 determines that the category corresponding to the named entity is category 'Music', the first electronic device 701 may determine that a domain is app 'A', which is a music streaming app, and intent is `playing' a song titled "XXX". For example, the first electronic device 701 may provide a first graphic user interface 710 indicating a result of performing an action based on the domain and intent for named entity "XXX", which are determined regardless of the preference of the user of the first electronic device 701. For example, the user's intent may be playing a TV program titled "XXX". In this case, the first graphic user interface 710 may include a result that does not correspond to the user's intent.

For example, when there are a plurality of categories corresponding to the named entity, the second electronic device 702 determines the category corresponding to the named entity with reference to the preference of an individual (a user of an electronic device) and may determine the domain and intent depending on the determined category. For example, the second electronic device 702 may store a history of playing a TV program titled a named entity "XXX" during a threshold time or longer. Such the history information may indicate that the user of the second electronic device 702 prefers a TV program titled named entity "XXX". For example, specific category (e.g., TV shows) preference information about named entity "XXX" may be collected by the second electronic device 702 as personal data of a user of the second electronic device 702. For example, on the basis of the collected personal data, the second electronic device 702 may determine that the category corresponding to the user's intent is category 'TV shows' among category 'TV shows' and category 'Music', which are found for named entity "XXX" based on public data. For example, when determining that the category corresponding to the user's intent is category 'TV shows', the second electronic device 702 may determine that a domain is app 'G', which is an app capable of playing TV programs, and may determine that the intent is `playing' a TV program titled "XXX". For example, the second electronic device 702 may provide a second graphic user interface 720 indicating a result of performing an action based on the domain and intent for named entity "XXX", which are determined with reference to the preference of the user of the second electronic device 702. The second graphic user interface 720 may include a result corresponding to the user's intent.

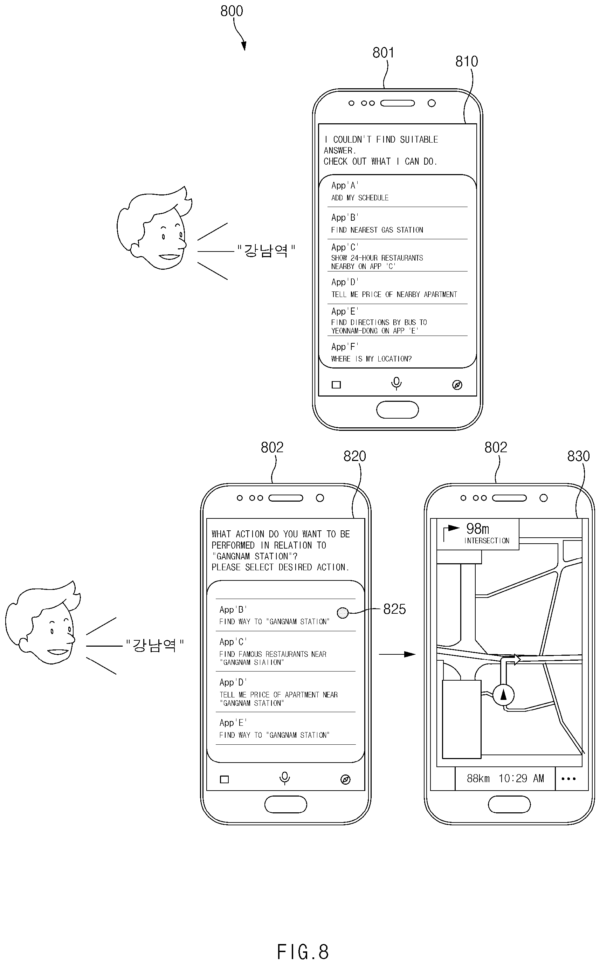

FIG. 8 is a diagram 800 illustrating a graphic user interface provided by an electronic device, according to an example. A second electronic device 802 shown in FIG. 8 may correspond to the electronic device 101 in FIG. 1. For example, an operation of the second electronic device 802 described later may be performed by a processor (e.g., the processor 140 in FIG. 1). A first electronic device 801 shown in FIG. 8 may be an electronic device for comparison with the second electronic device 802. The first electronic device 801 may be an electronic device according to the prior art.

For example, the first electronic device 801 and the second electronic device 802 may receive the same utterance of "Gangnam station" from a user. For example, the utterance received by the first electronic device 801 and the second electronic device 802 may be an utterance composed only of a named entity without a predicate. Referring to FIG. 8, even though both devices receive the same utterance, the first electronic device 801 and the second electronic device 802 may provide different pieces of information.

For example, in a case of an utterance without a predicate, the first electronic device 801 may fail to determine a category, domain, or intent of the utterance. For example, the first electronic device 801 may not determine that "Gangnam station" is included in category 'Location'. Accordingly, the first electronic device 601 has no choice but to provide a first graphic user interface 810 including a popular utterance hint list (or intent list) unrelated to the received utterance. For example, the first graphic user interface 810 may include information indicating an utterance (or intent) executable by at least one domain. For example, at least one domain or intent indicated by information included in the first graphic user interface 810 may not be related to a named entity called "Gangnam station" or category 'Location'.

For example, even when an utterance does not include a predicate, the second electronic device 802 may search a database including public data and personal data based on a named entity included in the utterance, may obtain execution information, and may perform an action corresponding to the user's intent by using the execution information. For example, the second electronic device 802 may obtain execution information indicating that named entity "Gangnam station" is determined as being included in category 'Location' based on public data, and specified actions are capable of being respectively performed by app `B', app 'C', app 'D', and app 'E'. The second electronic device 802 may provide the second graphic user interface 820 including an intent list related to "Gangnam station" by using the execution information. For example, the intent list may include intent information capable of being executed by app 'B', app 'C', app 'D', and app 'E'.

The second electronic device 802 may receive a user input 825 for selecting one of pieces of intent included in the intent list. The second electronic device 802 may provide a third graphic user interface 830 in response to receiving the user input 825. For example, the intent selected by the user input 825 may be performing an action for guiding a route to "Gangnam station" by app 'B'. The second electronic device 802 may perform the action for providing a route to "Gangnam station" in app 'B' in response to the user input 825. For example, the third graphic user interface 830 may display a screen for providing a route to "Gangnam station" in app `B'.

For example, in response to receiving the user input 825, the second electronic device 802 may store a history of performing the action of providing a route to "Gangnam station" as a destination in app 'B' with respect to named entity "Gangnam station". For example, domain information that performed an action for named entity "Gangnam station" or intent information corresponding to the performed action may be collected by the second electronic device 802 as personal data of a user of the second electronic device 802. For example, the second electronic device 802 may determine that a domain corresponding to the user's intent is determined based on public data as app `B', and the user's intent is used to perform a guide action by using app 'B' among app `B', app `C', app `D', and app 'E' found for named entity "Gangnam station", based on the collected personal data. For example, when receiving an utterance that includes named entity "Gangnam station" and does not include a predicate after the personal data is collected, the second electronic device 802 may not provide the second graphic user interface 820, but may provide the third graphic user interface 830 of displaying a screen indicating that an action corresponding to the user's intent is performed.

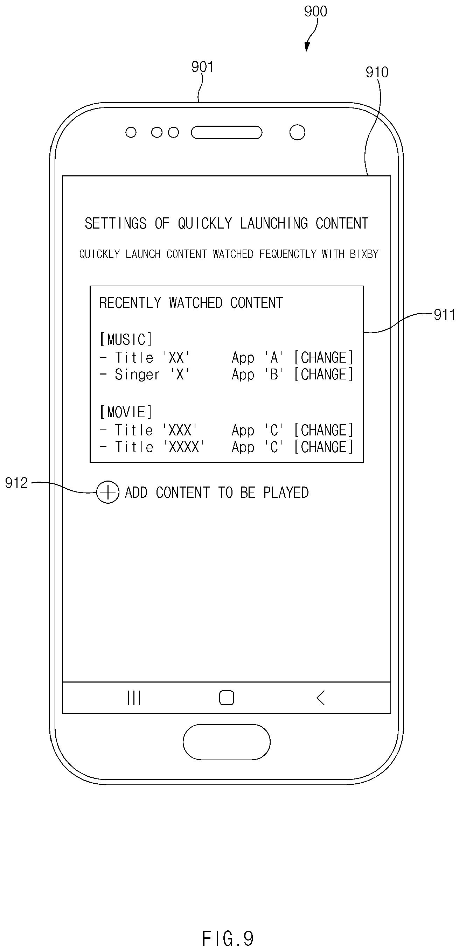

FIG. 9 is a diagram 900 illustrating a graphic user interface provided by an electronic device, according to an example. An electronic device 901 shown in FIG. 9 may correspond to the electronic device 101 in FIG. 1. For example, an operation of the electronic device 901 described later may be performed by a processor (e.g., the processor 140 in FIG. 1).

Referring to FIG. 9, the electronic device 901 may provide a graphic user interface 910 for specifying a domain, in which an action is performed on at least one named entity. For example, the graphic user interface 910 may include a first user interface (UI) element 911 including a list of named entities included in a specific category and a button for specifying or changing a domain for at least one named entity included in the list. For example, the first UI element 911 may include a list of named entities included in category 'Media Contents'. For example, the named entities may be classified for each type of content and may be included in the list.

For example, the graphic user interface 910 may include a second UI element 912 including a button for adding a named entity to which a domain is to be specified. In the example shown in FIG. 9, the second UI element 912 may be a button for adding a named entity included in category 'Media Contents'.

For example, the graphic user interface 910 may be a user interface for specifying only a domain in a state where intent is specified. For example, the graphic user interface 910 may be a user interface for selecting a domain corresponding to each named entity among domains capable of executing the same or similar intent. In the example shown in FIG. 9, the graphic user interface 910 may be a user interface for specifying (or selecting) a domain for executing intent of 'playing content' for each named entity related to the content.

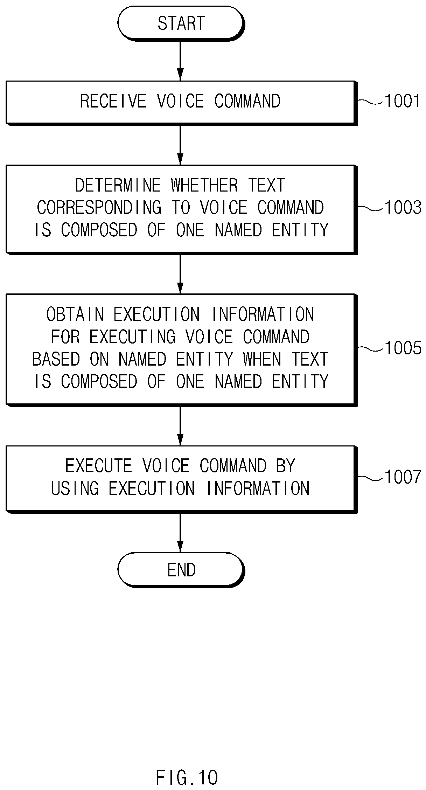

FIG. 10 is a flowchart 1000 illustrating an operation of an electronic device, according to an example. Hereinafter, each of operations in an embodiment may be sequentially performed, but is not necessarily sequentially performed. For example, the order of operations may be changed, and at least two operations may be performed in parallel. Operations of an electronic device (e.g., the electronic device 101 of FIG. 1) described below may be performed by, for example, a processor (e.g., the processor 140 of FIG. 1) of the electronic device.

In operation 1001, the electronic device 101 may receive a voice command. For example, the electronic device 101 may receive the voice command through a microphone (e.g., the microphone 110 in FIG. 1). For example, the voice command may be referred to as a "user utterance". For example, the electronic device 101 may convert the voice command received through the microphone 110 into a text based on ASR.

In operation 1003, the electronic device 101 may determine whether the text corresponding to the voice command is composed of one named entity. For example, when the text corresponding to the voice command does not include a predicate and includes one named entity, the electronic device 101 may determine that the text is composed of one named entity.

In operation 1005, when the text is composed of one named entity, the electronic device 101 may obtain execution information for executing the voice command based on the named entity. For example, the execution information may include domain information indicating an application executing a voice command and intent information indicating a function of an application requested by the voice command. For example, the electronic device 101 may obtain the execution information by searching for a database (e.g., the DB 235 in FIG. 2) based on the named entity. For example, the electronic device 101 may search for the database based on a character string and pronunciation string of the named entity. For example, the database may include public data (e.g., the public data 235-2 of FIG. 2) and personal data (e.g., the personal data 235-1 of FIG. 2).

For example, the public data may include named entities used by the public. For example, the public data may be repeatedly updated to the latest data at a specified time point through an external server. For example, the personal data may include data specialized or specific to an individual (e.g., a user of the electronic device 101). For example, the electronic device 101 may collect a registered named entity as personal data based on a user input received through an input device (e.g., including the microphone 110) of the electronic device 101. The public data and the personal data may include category information, domain information, and/or intent information related to the named entity.

For example, when a plurality of categories corresponding to the named entity are found based on the public data, the electronic device 101 may obtain usage ratio information about each category. For example, the usage ratio information about each category may indicate a ratio at which the named entity is used as each category among the plurality of categories. For example, the usage ratio information about each category may indicate a probability that the named entity is to be used as each category among the plurality of categories. The electronic device 101 may determine a category corresponding to the named entity based on the ratio information. The electronic device 101 may obtain execution information corresponding to the determined category.

For example, when a plurality of categories corresponding to the named entity are found based on the public data, the electronic device 101 may provide a first user interface for querying a user about a category, to which desired information belongs, from among the plurality of categories. For example, the electronic device 101 may provide the first user interface by displaying a graphic user interface on a display of the electronic device 101. For example, when the plurality of categories corresponding to the named entity are found, and when the electronic device 101 does not determine that a category corresponding to the named entity is one category, based on the ratio information for each category, the electronic device 101 may identify a category intended by the user through the first user interface. The electronic device 101 may obtain execution information corresponding to a category selected in response to a user input to the user interface.

For example, when a plurality of categories corresponding to the named entity are found based on public data, and when it is possible to specify one category among the plurality of categories based on personal data, the electronic device 101 may obtain execution information corresponding to one specific category. For example, when the search result based on the personal data indicates that there is only one category corresponding to the named entity, the electronic device 101 may specify the corresponding category as a category corresponding to the named entity. For example, when the search result based on the personal data indicates that there are a plurality of categories corresponding to the named entity, the electronic device 101 may specify a category having the highest usage count or a category having the highest preference among the plurality of categories as a category corresponding to the named entity.

For example, when there is no data found from the database based on the named entity, the electronic device 101 may provide a second user interface including an intent list thus popularly used. For example, the electronic device 101 may provide the second user interface by displaying a graphic user interface on a display of the electronic device 101.

For example, when the text corresponding to the voice command is not composed of one named entity, the electronic device 101 may determine intent through natural language processing for the text. The electronic device 101 may determine a domain and intent by analyzing (e.g., syntactic analysis and/or semantic analysis) the text based on NLU. The electronic device 101 may perform a function corresponding to the determined intent.

For example, only when the text is composed of one named entity and there are two or more domains corresponding to the named entity, the electronic device 101 may perform operation 1005. For example, when the text is composed of one named entity and there is one domain corresponding to the named entity, the electronic device 101 may determine intent in the domain through natural language processing for the text and may perform a function corresponding to the determined intent.

In operation 1007, the electronic device 101 may execute the voice command using the execution information. For example, the electronic device 101 may execute the voice command using the domain indicated by domain information included in the execution information. For example, the electronic device 101 may execute the voice command by executing a function of a domain indicated by intent information included in the execution information. For example, the electronic device 101 may perform an action corresponding to the voice command based on the domain and/or intent indicated by the domain information or intent information included in the execution information. For example, the electronic device 101 may perform an action corresponding to the voice command based on the domain or intent specified by using the execution information. For example, the electronic device 101 may perform an action corresponding to the intent selected in response to a user input to a user interface provided by using the execution information.

For example, when the action performed by the execution of the voice command corresponds to the user's intent of the electronic device, the electronic device 101 may store information used to execute the voice command as personal data. The information used to execute the voice command may include at least one of a named entity, a category corresponding to the named entity, the number of times that the named entity is uttered, a domain in which an action is performed, or intent corresponding to an action performed in the domain. For example, the electronic device 101 may store the information used to execute the voice command while the named entity operates in conjunction with other information. Accordingly, when the electronic device 101 receives a voice command including the same named entity, the processor 140 may obtain information (e.g., a category, the number of utterances, a domain, and/or intent) related to the named entity stored in a database. For example, the electronic device 101 may perform an action corresponding to a voice command based on the obtained domain information or intent information.

For example, on the basis of the named entity usage history in at least one application stored (or installed) in the electronic device 101, the electronic device 101 may associate a named entity extracted from the named entity usage history in each application with a domain corresponding to each application or intent in which the extracted named entity is used, and store the associated result in a database. For example, when the named entity included in the voice command corresponds to a named entity having a history of previous use, the electronic device 101 may perform an action depending on the domain or intent determined based on a usage history.

For example, through an input device of the electronic device 101, the electronic device 101 may receive a user input for specifying a domain, in which an action is performed on at least one named entity, or intent in the domain. When a voice command including the at least one named entity is received in response to the received user input, the electronic device 101 may be configured to perform an action depending on the specified domain or intent. For example, the electronic device 101 may associate a named entity with the specified domain or intent so as to correspond to the named entity and may store the associated result in the database. For example, when the named entity included in the voice command corresponds to the named entity whose domain or intent is specified in response to a user input, the electronic device 101 may perform an action depending on the specified domain or intent.

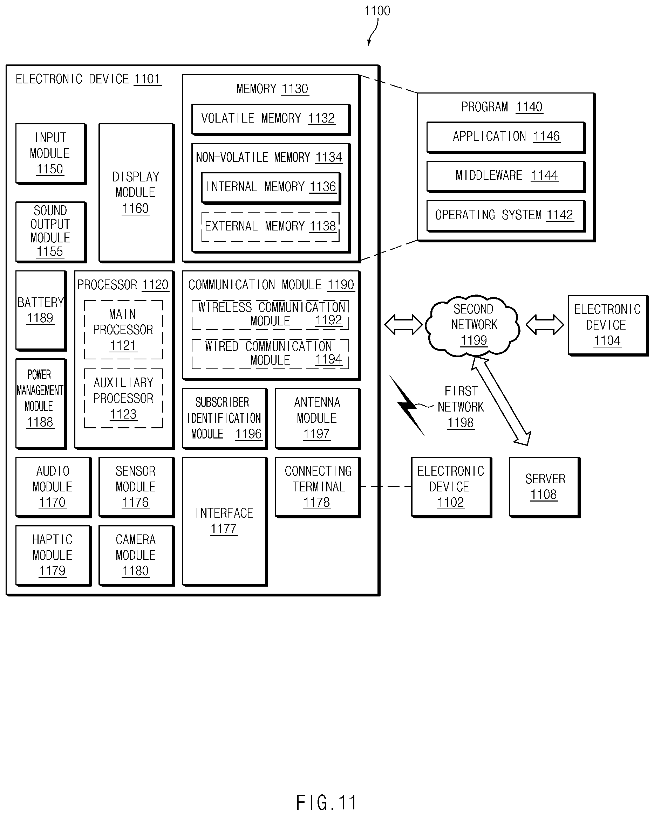

Hereinafter, the electronic device 1101 of FIG. 11 may correspond to the electronic device 101 of FIG. 1. The microphone 110 of FIG. 1 may correspond to the input module 1150 of FIG. 11. The communication circuit 120 of FIG. 1 may correspond to the communication module 1190 of FIG. 11. The memory 130 of FIG. 1 may correspond to the memory 1130 of FIG. 11. The processor 940 of FIG. 1 may correspond to the processor 1120 of FIG. 11. For example, the electronic device 101 of FIG. 1 may further include a component (e.g., the display module 1160) of the electronic device 1101 of FIG. 11.

Fig. 11 is a block diagram illustrating an electronic device 1101 in a network environment 1100 according to various embodiments. Referring to Fig. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thererto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as BluetoothTM, wirelessfidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

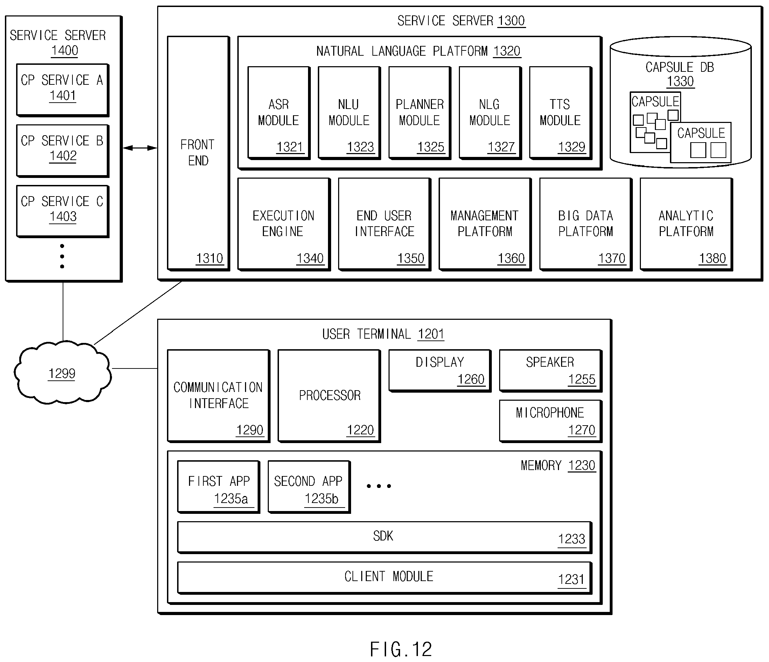

Hereinafter, the user terminal 1201 of FIG. 12 may correspond to the electronic device 101 of FIG. 1 and/or the electronic device 1101 of FIG. 11. The microphone 110 of FIG. 1 may correspond to the microphone 1270 of FIG. 12. The communication circuit 120 of FIG. 1 may correspond to the communication interface 1290 of FIG. 12. The memory 130 of FIG. 1 may correspond to the memory 1230 of FIG. 12. The processor 140 of FIG. 1 may correspond to the processor 1220 of FIG. 12. For example, the electronic device 101 of FIG. 1 may further include a component (e.g., the display module 1260) of the user terminal 1201 of FIG. 12. The ASR module 1321 of FIG. 12 may correspond to the ASR module 210 of FIG. 2. The NLU module 1323 of FIG. 12 may correspond to the NLU module 220 of FIG. 2. The electronic device 101 of FIG. 1 may be an example in which all or at least some (e.g., the ASR module 1321 and/or the NLU module 1323) of modules of the intelligent server 1300 of FIG. 12 are implemented in the electronic device 101. The electronic device 101 of FIG. 1 may perform all or some of functions of the intelligent server 1300 of FIG. 12 (e.g., the server 1108 of FIG. 11) by itself.

FIG. 12 is a block diagram illustrating an integrated intelligence system, according to an embodiment.

Referring to FIG. 12, an integrated intelligence system according to an example may include a user terminal 1201, an intelligent server 1300, and a service server 1400 (e.g., the server 1108 in FIG. 11).

The user terminal 1201 according to an embodiment may be a terminal device (or an electronic device) capable of connecting to Internet, and may be, for example, a mobile phone, a smartphone, a personal digital assistant (PDA), a notebook computer, a television (TV), a household appliance, a wearable device, a head mounted display (HMD), or a smart speaker.

According to the illustrated embodiment, the user terminal 1201 may include a communication interface 1290, a microphone 1270, a speaker 1255, a display 1260, a memory 1230, or a processor 1220. The listed components may be operatively or electrically connected to one another.

The communication interface 1290 according to an embodiment may be connected to an external device and may be configured to transmit or receive data to or from the external device. The microphone 1270 according to an embodiment may receive a sound (e.g., a user utterance) to convert the sound into an electrical signal. The speaker 1255 according to an embodiment may output the electrical signal as sound (e.g., voice).

The display 1260 according to an embodiment may be configured to display an image or a video. The display 1260 according to an embodiment may display the graphic user interface (GUI) of the running app (or an application program).

The display 1260 according to an embodiment may receive a touch input through a touch sensor. For example, the display 1260 may receive a text input through the touch sensor of an on-screen keyboard area displayed in the display 1260.

The memory 1230 (e.g., the memory 1130 of FIG. 11) according to an example may store a client module 1231, a software development kit (SDK) 1233, and a plurality of applications. The client module 1231 and the SDK 1233 may constitute a framework (or a solution program) for performing general-purposed functions. Moreover, the client module 1231 or SDK 1233 may constitute a framework for processing a user input (e.g., a voice input, a text input, or a touch input).

The plurality of apps 1235 may be programs for performing a specified function. According to an embodiment, the plurality of apps 1235 may include a first app 1235a and/or a second app 1235_3. According to an embodiment, each of the plurality of apps 1235 may include a plurality of actions for performing a specified function. For example, the apps may include an alarm app, a message app, and/or a schedule app. According to an embodiment, the plurality of apps 1235 may be executed by the processor 1220 to sequentially execute at least part of the plurality of actions.

According to an embodiment, the processor 1220 may control overall operations of the user terminal 1201. For example, the processor 1220 may be electrically connected to the communication interface 1290, the microphone 1270, the speaker 1255, and the display 1260 to perform a specified operation. For example, the processor 1220 may include at least one processor.

Moreover, the processor 1220 according to an embodiment may execute the program stored in the memory 1230 so as to perform a specified function. For example, according to an embodiment, the processor 1220 may execute at least one of the client module 1231 or the SDK 1233 so as to perform a following operation for processing a voice input. The processor 1220 may control operations of the plurality of apps 1235 via the SDK 1233. The following actions described as the actions of the client module 1231 or the SDK 1233 may be the actions performed by the execution of the processor 1220.

The client module 1231 according to an example may receive a user input. For example, the client module 1231 may receive a voice signal corresponding to a user utterance detected through the microphone 1270. Alternatively, the client module 1231 may receive a touch input detected through the display 1260. Alternatively, the client module 1231 may receive a text input detected through a keyboard or an on-screen keyboard. Besides, various types of user inputs detected through an input module included in the user terminal 1201 or an input module connected to the user terminal 1201 may be received. The client module 1231 may transmit the received user input (e.g., a voice signal) to the intelligent server 1300. The client module 1231 may transmit state information of the user terminal 1201 to the intelligent server 1300 together with the received user input. For example, the state information may be execution state information of an app.

According to an example, the client module 1231 may receive a result corresponding to the received user input from the intelligent server 1300. For example, when the intelligent server 1300 is capable of calculating the result corresponding to the received user input, the client module 1231 may receive the result corresponding to the received user input. The client module 1231 may display the received result on the display 1260. Moreover, the client module 1231 may output the received result as a sound through the speaker 1255.

According to an example, the client module 1231 may receive a plan corresponding to the received user input. The client module 1231 may display, on the display 1260, a result of executing a plurality of actions of an app depending on the plan. For example, the client module 1231 may sequentially display results of executing the plurality of actions on a display and may output a sound through the speaker 1255. As another example, the user terminal 1201 may display only a part of results (e.g., a result of the last action) of executing the plurality of actions on the display and may output a sound through the speaker 1255.

According to an example, the client module 1231 may receive a request for obtaining information necessary to calculate the result corresponding to a user input, from the intelligent server 1300. According to an example, the client module 1231 may transmit the necessary information to the intelligent server 1300 in response to the request.

According to an example, the client module 1231 may transmit, to the intelligent server 1300, information about the result of executing a plurality of actions depending on the plan. The intelligent server 1300 may identify that the received user input is correctly processed, by using the result information.

According to an embodiment, the client module 1231 may include a speech recognition module. According to an embodiment, the client module 1231 may recognize a voice input for performing a limited function, via the speech recognition module. For example, the client module 1231 may launch an intelligence app for processing a specific voice input by performing an organic action, in response to a specified voice input (e.g., wake up!).

According to an embodiment, the intelligence server 1300 may receive information associated with a user's voice input from the user terminal 1201 over a communication network 1299. According to an embodiment, the intelligence server 1300 may convert data associated with the received voice input to text data. According to an embodiment, the intelligence server 1300 may generate at least one plan for performing a task corresponding to the user's voice input, based on the text data.

According to an embodiment, the plan may be generated by an artificial intelligent (AI) system. The AI system may be a rule-based system, or may be a neural network-based system (e.g., a feedforward neural network (FNN) and/or a recurrent neural network (RNN)). Alternatively, the AI system may be a combination of the above-described systems or an AI system different from the above-described system. According to an embodiment, the plan may be selected from a set of predefined plans or may be generated in real time in response to a user's request. For example, the AI system may select at least one plan of the plurality of predefined plans.

According to an embodiment, the intelligence server 1300 may transmit a result according to the generated plan to the user terminal 1201 or may transmit the generated plan to the user terminal 1201. According to an embodiment, the user terminal 1201 may display the result according to the plan, on a display. According to an embodiment, the user terminal 1201 may display a result of executing the action according to the plan, on the display.

The intelligence server 1300 according to an embodiment may include a front end 1310, a natural language platform 1320, a capsule database 1330, an execution engine 1340, an end user interface 1350, a management platform 1360, a big data platform 1370, or an analytic platform 1380.

According to an embodiment, the front end 1310 may receive a voice input received from the user terminal 1201. The front end 1310 may transmit a response corresponding to the voice input to the user terminal 1201.

According to an embodiment, the natural language platform 1320 may include an automatic speech recognition (ASR) module 1321, a natural language understanding (NLU) module 1323, a planner module 1325, a natural language generator (NLG) module 1327, and/or a text to speech module (TTS) module 1329.

According to an example, the ASR module 1321 may convert the user input received from the user terminal 1201 into text data. According to an example, the NLU module 1323 may grasp the intent of the user by using the text data of the user input. For example, the NLU module 1323 may grasp the intent of the user by performing syntactic analysis or semantic analysis on the user input in a form of text data. According to an example, the NLU module 1323 may grasp the meaning of words extracted from the user input by using linguistic features (e.g., syntactic elements) such as morphemes or phrases and may determine the intent of the user by matching the grasped meaning of the words to the intent. The NLU module 1323 may obtain intent information corresponding to a user utterance. The intent information may be information indicating the user's intent determined by interpreting the text data. The intent information may include information indicating an action or function that the user wants to execute by using a device.

According to an embodiment, the planner module 1325 may generate the plan by using a parameter and the intent that is determined by the NLU module 1323. According to an embodiment, the planner module 1325 may determine a plurality of domains necessary to perform a task, based on the determined intent. The planner module 1325 may determine a plurality of actions included in each of the plurality of domains determined based on the intent. According to an embodiment, the planner module 1325 may determine the parameter necessary to perform the determined plurality of actions or a result value output by the execution of the plurality of actions. The parameter and the result value may be defined as a concept of a specified form (or class). As such, the plan may include the plurality of actions and/or a plurality of concepts, which are determined by the intent of the user. The planner module 1325 may determine the relationship between the plurality of actions and the plurality of concepts stepwise (or hierarchically). For example, the planner module 1325 may determine the execution sequence of the plurality of actions, which are determined based on the user's intent, based on the plurality of concepts. In other words, the planner module 1325 may determine an execution sequence of the plurality of actions, based on the parameters necessary to perform the plurality of actions and the result output by the execution of the plurality of actions. Accordingly, the planner module 1325 may generate a plan including information (e.g., ontology) about the relationship between the plurality of actions and the plurality of concepts. The planner module 1325 may generate the plan, using information stored in the capsule DB 1330 storing a set of relationships between concepts and actions.

According to an embodiment, the NLG module 1327 may change specified information into information in a text form. The information changed to the text form may be in the form of a natural language speech. The TTS module 1329 according to an embodiment may change information in the text form to information in a voice form.

According to an embodiment, all or part of the functions of the natural language platform 1320 may be also implemented in the user terminal 1201.

The capsule DB 1330 may store information about the relationship between the actions and the plurality of concepts corresponding to a plurality of domains. According to an embodiment, the capsule may include a plurality of action objects (or action information) and concept objects (or concept information) included in the plan. According to an embodiment, the capsule DB 1330 may store the plurality of capsules in a form of a concept action network (CAN). According to an embodiment, the plurality of capsules may be stored in the function registry included in the capsule DB 1330.

The capsule DB 1330 may include a strategy registry that stores strategy information necessary to determine a plan corresponding to the user input. When there are a plurality of plans corresponding to the user input, the strategy information may include reference information for determining one plan. According to an example, the capsule DB 1330 may include a follow-up registry that stores information of the follow-up action for suggesting a follow-up action to the user in a specified context. For example, the follow-up action may include a follow-up utterance. According to an example, the capsule DB 1330 may include a layout registry storing layout information of information output via the user terminal 1201. According to an example, the capsule DB 1330 may include a vocabulary registry storing vocabulary information included in capsule information. According to an example, the capsule DB 1330 may include a dialog registry storing information about dialog (or interaction) with the user. The capsule DB 1330 may update an object stored via a developer tool. For example, the developer tool may include a function editor for updating an action object or a concept object. The developer tool may include a vocabulary editor for updating a vocabulary. The developer tool may include a strategy editor that generates and registers a strategy for determining the plan. The developer tool may include a dialog editor that creates a dialog with the user. The developer tool may include a follow-up editor capable of activating a follow-up target and editing the follow-up utterance for providing a hint. The follow-up target may be determined based on a target, the user's preference, or an environment condition, which is currently set. In an example, the capsule DB 1330 may be implemented in the user terminal 1201.

According to an embodiment, the execution engine 1340 may calculate a result by using the generated plan. The end user interface 1350 may transmit the calculated result to the user terminal 1201. Accordingly, the user terminal 1201 may receive the result and may provide the user with the received result. According to an embodiment, the management platform 1360 may manage information used by the intelligence server 1300. According to an embodiment, the big data platform 1370 may collect data of the user. According to an embodiment, the analytic platform 1380 may manage quality of service (QoS) of the intelligence server 1300. For example, the analytic platform 1380 may manage the component and processing speed (or efficiency) of the intelligence server 1300.

According to an embodiment, the service server 1400 may provide the user terminal 1201 with a specified service (e.g., ordering food or booking a hotel). According to an embodiment, the service server 1400 may be a server operated by the third party. According to an embodiment, the service server 1400 may provide the intelligence server 1300 with information for generating a plan corresponding to the received voice input. The provided information may be stored in the capsule DB 1330. Furthermore, the service server 1400 may provide the intelligence server 1300 with result information according to the plan.

In the above-described integrated intelligence system, the user terminal 1201 may provide the user with various intelligent services in response to a user input. The user input may include, for example, an input through a physical button, a touch input, or a voice input.

According to an embodiment, the user terminal 1201 may provide a speech recognition service via an intelligence app (or a speech recognition app) stored therein. In this case, for example, the user terminal 1201 may recognize a user utterance or a voice input, which is received via the microphone, and may provide the user with a service corresponding to the recognized voice input.

According to an embodiment, the user terminal 1201 may perform a specified action, based on the received voice input, independently, or together with the intelligence server 1300 and/or the service server 1400. For example, the user terminal 1201 may launch an app corresponding to the received voice input and may perform the specified action via the executed app.

According to an embodiment, when providing a service together with the intelligence server 1300 and/or the service server 1400, the user terminal 1201 may detect a user utterance by using the microphone 1270 and may generate a signal (or voice data) corresponding to the detected user utterance. The user terminal may transmit the voice data to the intelligence server 1300 by using the communication interface 1290.

According to an embodiment, the intelligence server 1300 may generate a plan for performing a task corresponding to the voice input or the result of performing an action depending on the plan, as a response to the voice input received from the user terminal 1201. For example, the plan may include a plurality of actions for performing the task corresponding to the voice input of the user and/or a plurality of concepts associated with the plurality of actions. The concept may define a parameter to be input upon executing the plurality of actions or a result value output by the execution of the plurality of actions. The plan may include relationship information between the plurality of actions and/or the plurality of concepts.

According to an embodiment, the user terminal 1201 may receive the response by using the communication interface 1290. The user terminal 1201 may output the voice signal generated in the user terminal 1201 to the outside by using the speaker 1255 or may output an image generated in the user terminal 1201 to the outside by using the display 1260.

In FIG. 12, it is described that speech recognition of a voice input received from the user terminal 1201, understanding and generating a natural language, and calculating a result by using a plan are performed on the intelligence server 1300. However, various embodiments of the disclosure are not limited thereto. For example, at least part of configurations (e.g., the natural language platform 1320, the execution engine 1340, and the capsule DB 1330) of the intelligence server 1300 may be embedded in the user terminal 1201 (or the electronic device 101 of FIG. 1), and the operation thereof may be performed by the user terminal 1201.

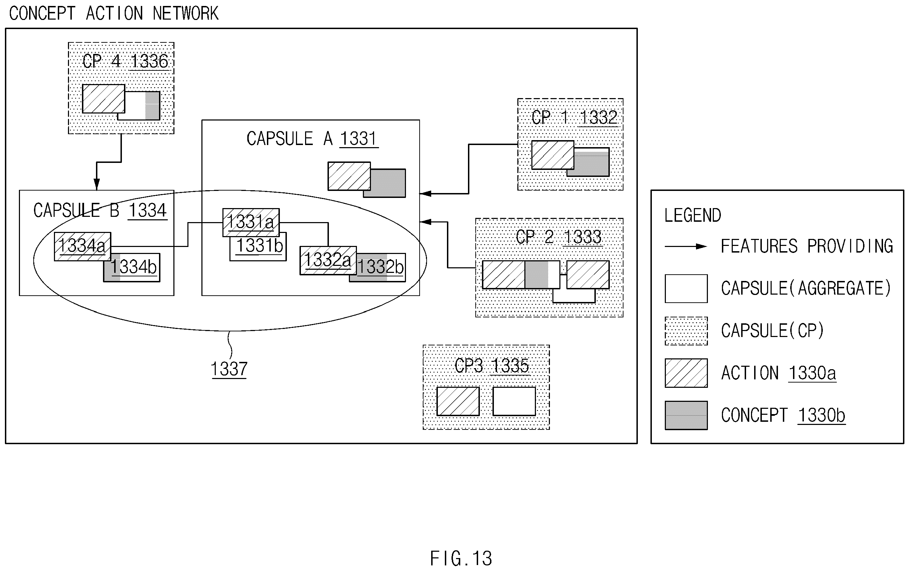

FIG. 13 is a diagram illustrating a form in which relationship information between a concept and an action is stored in a database, according to various embodiments.

A capsule database (e.g., the capsule DB 1330) of the intelligent server (e.g., the intelligent server 1300 of FIG. 12) may store a capsule in a form of a concept action network (CAN). The capsule DB may store an action for processing a task corresponding to a user's voice input and a parameter necessary for the action, in the CAN form.

The capsule DB may store a plurality capsules (a capsule A 1331 and a capsule B 1334) respectively corresponding to a plurality of domains (e.g., applications). According to an embodiment, a single capsule (e.g., the capsule A 1331) may correspond to a single domain (e.g., a location (geo) or an application). Furthermore, at least one service provider (e.g., CP 1 1332 or CP 12 1333) for performing a function for a domain associated with the capsule may correspond to one capsule. According to an embodiment, the single capsule may include at least one or more actions 1330a and at least one or more concepts 1330b for performing a specified function.

The natural language platform (e.g., the natural language platform 1320 of FIG. 12) may generate a plan for performing a task corresponding to the received voice input by using the capsule stored in the capsule DB 1330. For example, a planner module (e.g., the planner module 1325 of FIG. 12) of the natural language platform may generate a plan by using the capsule stored in the capsule DB. For example, a plan 1337 may be generated by using actions 1331a and 1332a and concepts 1331b and 1332b of the capsule A 1331 and an action 1334a and a concept 1334b of the capsule B 1334.

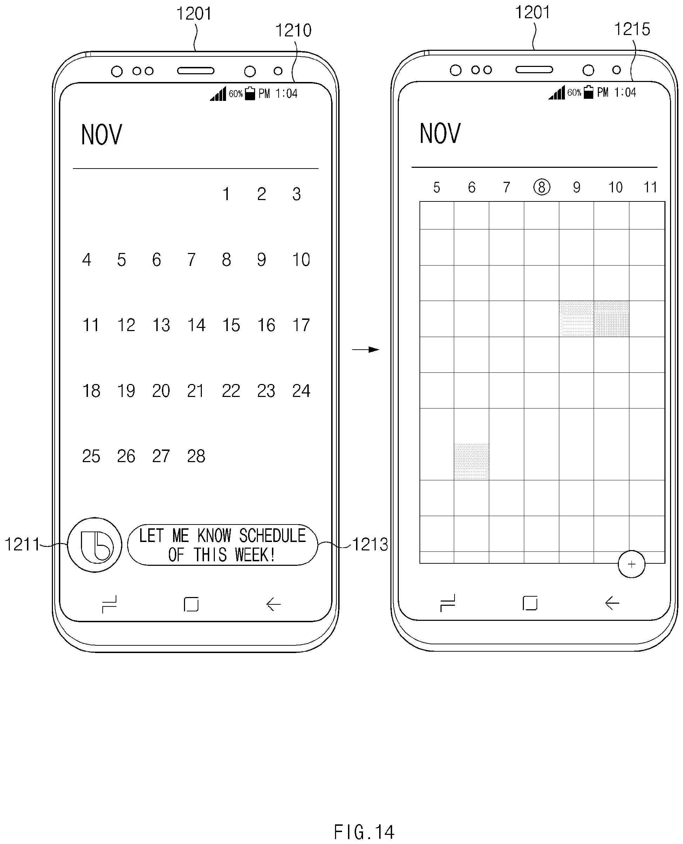

FIG. 14 is a view illustrating a screen in which a user terminal processes a voice input received through an intelligence app, according to various embodiments.

The user terminal 1201 may execute an intelligent app to process a user input through the intelligent server (e.g., the intelligent server 1300 of FIG. 12).

According to an example, on first screen 1210, when recognizing a specified voice input (e.g., wake up!) or receiving an input via a hardware key (e.g., a dedicated hardware key), the user terminal 1201 may launch an intelligent app for processing a voice input. For example, the user terminal 1201 may launch the intelligent app in a state where a schedule app is executed. According to an example, the user terminal 1201 may display an object (e.g., an icon 1411) corresponding to the intelligent app, in a display (e.g., the display 1260 of FIG. 12). According to an example, the user terminal 1201 may receive a voice input by a user utterance. For example, the user terminal 1201 may receive a voice input saying that "let me know the schedule of this week!". According to an example, the user terminal 1201 may display a user interface (UI) 1213 (e.g., an input window) of the intelligent app, in which text data of the received voice input is displayed, on a display.

According to an embodiment, on screen 1215, the user terminal 1201 may display a result corresponding to the received voice input, on the display. For example, the user terminal 1201 may receive a plan corresponding to the received user input and may display 'the schedule of this week' on the display depending on the plan.

An electronic device may provide a voice assistant function controlling a device based on a voice command. To provide the voice assistant function, the electronic device needs to identify a domain and intent of an action to be performed through a user's utterance. For example, as a range in which the voice assistant function processes an utterance increases, there may be limitations in deriving a result desired by the user by simply using contents of the utterance. For example, to specify the domain and intent by simply using the contents of the utterance, an utterance including a predicate may be required, or an utterance including a specific domain may be required. For example, when an utterance, which does not include a predicate or does not include a specific domain, is received, the electronic device may fail to perform an action corresponding to the user's intent.

For example, when receiving an utterance that does not include a specific domain but includes a predicate and a named entity, the electronic device may determine the user's intent based on a rule. For example, when the named entity is related to media contents, the electronic device may estimate the domain by calling the named entity search server (NES server) and determining a category corresponding to the named entity. However, when the electronic device receives an utterance without a predicate, the electronic device may not call the NES server. In this case, because the electronic device does not grasp the user's intent, the electronic device may only provide a list of popular utterance hints unrelated to the content of the utterance.

For example, even when the electronic device receives the utterance including a predicate and determines the category corresponding to the named entity through the NES server, the electronic device may still fail to identify the user's intent when there are a plurality of categories. In this case, the electronic device may perform an action based on its own ordering of the voice assistant function. The result of performing the action may not be the result that the user wants.

In an embodiment of the disclosure, the user's desired domain (an application-side domain) and the user's intent may be identified even for an utterance without a predicate.

In an embodiment of the disclosure, even for an utterance in which the user's intent is unclear, intent information related to the utterance may be identified and may be provided to the user.

In an embodiment of the disclosure, even when there are a plurality of categories corresponding to an utterance, the user's intent may be identified by using personal data.

According to an embodiment of the disclosure, an electronic device (101;602;702;802;901;1101;1201) may include a microphone (110;1150;1270), a communication circuit (120;1190;1290), a memory (130;1130;1230), and a processor (140;1120;1220). The memory may store instructions. When executed by the processor, the instructions may cause the electronic device to receive a voice command through the microphone. When executed by the processor, the instructions may cause the electronic device to determine whether a text corresponding to the voice command is composed of one named entity. When executed by the processor, the instructions may cause the electronic device to obtain execution information for executing the voice command based on the named entity. The execution information may include domain information indicating an application executing the voice command, or intent information indicating a function of the application requested by the voice command. When executed by the processor, the instructions may cause the electronic device to execute the voice command by using the execution information.

According to an embodiment of the disclosure, the instructions, when executed by the processor, may cause the electronic device to obtain the execution information based on the named entity when the text is composed of one named entity, and there are two or more domains corresponding to the named entity. The instructions, when executed by the processor, may cause the electronic device to determine intent in the domain and to perform a function corresponding to the determined intent when the text is composed of one named entity, and there is a domain corresponding to the named entity.

According to an embodiment of the disclosure, the instructions, when executed by the processor, may cause the electronic device to determine intent through natural language processing for the text and to perform a function corresponding to the determined intent when the text is not composed of one named entity.

According to an embodiment of the disclosure, the instructions, when executed by the processor, may cause the electronic device to searching for a database (235) including public data (235-2) and personal data (235-1) based on a character string and a pronunciation string of the named entity.

According to an embodiment of the disclosure, the instructions, when executed by the processor, may cause the electronic device to obtain ratio information about each category when a plurality of categories corresponding to the named entity is found based on the public data. The instructions, when executed by the processor, may cause the electronic device to determine the category corresponding to the named entity based on the ratio information. The instructions, when executed by the processor, may cause the electronic device to obtain the execution information corresponding to the determined category.

According to an embodiment of the disclosure, the instructions, when executed by the processor, may cause the electronic device to provide a first user interface for querying a user about a category, to which desired information belongs, from among the plurality of categories when a plurality of categories corresponding to the named entity are found based on the public data. The instructions, when executed by the processor, may cause the electronic device to obtain the execution information corresponding to a category selected by a user input to the first user interface.

According to an embodiment of the disclosure, the instructions, when executed by the processor, may cause the electronic device to obtain the execution information corresponding to the specified one category when a plurality of categories corresponding to the named entity are found based on the public data, and one category among the plurality of categories is capable of being specified based on the personal data.

According to an embodiment of the disclosure, the instructions, when executed by the processor, may cause the electronic device to provide a second user interface including an intent list thus popularly used when there is no data found from the database based on the named entity. The instructions, when executed by the processor, may cause the electronic device to perform an action corresponding to intent selected by a user input to the second user interface.

According to an embodiment of the disclosure, the instructions, when executed by the processor, may cause the electronic device to determine whether a domain or intent is capable of being specified based on the text when the text is composed of one named entity. The instructions, when executed by the processor, may cause the electronic device to specify the domain or the intent by using the obtained execution information when the domain or the intent is incapable of being specified. The instructions, when executed by the processor, may cause the electronic device to perform an action corresponding to the voice command based on the specified domain or the specified intent.

According to an embodiment of the disclosure, the electronic device may further include an input device (1150; 1260; 1270). The instructions, when executed by the processor, may cause the electronic device to receive a user input for specifying a domain, in which an action is to be performed on at least one named entity, or intent in the domain through the input device. The instructions, when executed by the processor, may cause the electronic device to perform an action corresponding to the voice command depending on the specified domain or the specified intent when a voice command including one of the at least one named entity is received based on the received user input.

According to an embodiment of the disclosure, the instructions, when executed by the processor, may cause the electronic device to store information used to execute the voice command as the personal data when an action performed by execution of the voice command corresponds to intent of a user of the electronic device. The information used to execute the voice command may include at least one of the named entity, a category corresponding to the named entity, the number of times that the named entity is uttered, a domain in which an action is performed, or intent corresponding to the action performed in the domain.

According to an embodiment of the disclosure, the memory may store at least one application. The instructions, when executed by the processor, may cause the electronic device to associate a named entity extracted from a named entity usage history in each application with a domain corresponding to each application or intent in which the extracted named entity is used, based on a named entity usage history in the at least one application, and to store the associated result in a database.

According to an embodiment of the disclosure, an operating method of an electronic device (101;602;702;802;901;1101;1201) may include receiving a voice command through a microphone (110;1150;1270) of the electronic device. The method may include determining whether a text corresponding to the voice command is composed of one named entity. The method may include obtaining execution information for executing the voice command based on the named entity when the text is composed of one named entity. The execution information may include domain information indicating an application executing the voice command, or intent information indicating a function of the application requested by the voice command. The method may include executing the voice command by using the execution information.

According to an embodiment of the disclosure, the obtaining of the execution information is performed when the text is composed of one named entity, and there are two or more domains corresponding to the named entity. The method may include determining intent in the domain when the text is composed of one named entity, and there is a domain corresponding to the named entity. The method may include performing a function corresponding to the determined intent.

According to an embodiment of the disclosure, the method may include determining intent through natural language processing for the text when the text is not composed of one named entity. The method may include performing a function corresponding to the determined intent.

According to an embodiment of the disclosure, the obtaining of the execution information may include searching for a database (235) including public data (235-2) and personal data (235-1) based on a character string and a pronunciation string of the named entity.

According to an embodiment of the disclosure, the obtaining of the execution information may include obtaining ratio information about each category when a plurality of categories corresponding to the named entity is found based on the public data. The obtaining of the execution information may include determining the category corresponding to the named entity based on the ratio information. The obtaining of the execution information may include obtaining the execution information corresponding to the determined category.

According to an embodiment of the disclosure, the obtaining of the execution information may include providing a first user interface for querying a user about a category, to which desired information belongs, from among the plurality of categories when a plurality of categories corresponding to the named entity are found based on the public data. The obtaining of the execution information may include obtaining the execution information corresponding to a category selected by a user input to the first user interface.

According to an embodiment of the disclosure, the obtaining of the execution information may include obtaining the execution information corresponding to the specified one category when a plurality of categories corresponding to the named entity are found based on the public data, and one category among the plurality of categories is capable of being specified based on the personal data.

According to an embodiment of the disclosure, the method may include providing a second user interface including an intent list thus popularly used when there is no data found from the database based on the named entity. The method may include performing an action corresponding to intent selected by a user input to the second user interface.

According to an embodiment of the disclosure, the method may include determining whether a domain or intent is capable of being specified based on the text when the text is composed of one named entity. The method may include specifying the domain or the intent by using the obtained execution information when the domain or the intent is incapable of being specified. The method may include perform an action corresponding to the voice command based on the specified domain or the specified intent.

According to an embodiment of the disclosure, the method may include receiving a user input for specifying a domain, in which an action is to be performed on at least one named entity, or intent in the domain through the input device. The method may include performing an action corresponding to the voice command depending on the specified domain or the specified intent when a voice command including one of the at least one named entity is received based on the received user input.

According to an embodiment of the disclosure, the method may include storing information used to execute the voice command as the personal data when an action performed by execution of the voice command corresponds to intent of a user of the electronic device. The information used to execute the voice command may include at least one of the named entity, a category corresponding to the named entity, the number of times that the named entity is uttered, a domain in which an action is performed, or intent corresponding to the action performed in the domain.

According to an embodiment of the disclosure, the method may include associating a named entity extracted from a named entity usage history in each application with a domain corresponding to each application or intent in which the extracted named entity is used, based on a named entity usage history in the at least one application, and storing the associated result in a database.

According to an embodiment of the disclosure, a non-transitory computer-readable storage medium may store a program for performing an operating method of an electronic device. The operating method of the electronic device may include receiving a voice command through a microphone (110;1150;1270) of the electronic device. The method may include determining whether a text corresponding to the voice command is composed of one named entity. The method may include obtaining execution information for executing the voice command based on the named entity when the text is composed of one named entity. The execution information may include domain information indicating an application executing the voice command, or intent information indicating a function of the application requested by the voice command. The method may include executing the voice command by using the execution information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device (101;602;702;802;901;1101;1201) comprising:
a microphone (110;1150;1270);
a communication circuit (120;1190;1290);
a memory (130;1130;1230) configured to store instructions; and
a processor (140;1120;1220),
wherein the instructions, when executed by the processor, cause the electronic device to:
receive a voice command through the microphone;
determine whether a text corresponding to the voice command is composed of one named entity;
when the text is composed of one named entity, obtain execution information for executing the voice command based on the named entity, wherein the execution information includes domain information indicating an application for executing the voice command, or intent information indicating a function of the application requested by the voice command; and
execute the voice command using the execution information.

2. The electronic device of claim 1, wherein the instructions, when executed by the processor, cause the electronic device to:
when the text is composed of one named entity, and there are two or more domains corresponding to the named entity, obtain the execution information based on the named entity; and
when the text is composed of one named entity, and there is a domain corresponding to the named entity, determine an intent of the user from the domain and perform a function corresponding to the determined intent.

3. The electronic device of one of claims 1 and 2, wherein the instructions, when executed by the processor, cause the electronic device to:
when the text is not composed of one named entity, determine an intent of the user through natural language processing for the text and perform a function corresponding to the determined intent.

4. The electronic device of one of claims 1 to 3, wherein the instructions, when executed by the processor, cause the electronic device to:
search a database (235) including public data (235-2) and personal data (235-1) based on a character string and a pronunciation string of the named entity.

5. The electronic device of one of claims 1 to 4, wherein the instructions, when executed by the processor, cause the electronic device to:
when a plurality of categories corresponding to the named entity is found based on the public data, obtain ratio information about each category;
determine the category corresponding to the named entity based on the ratio information; and
obtain the execution information corresponding to the determined category.

6. The electronic device of one of claims 1 to 5, wherein the instructions, when executed by the processor, cause the electronic device to:
when a plurality of categories corresponding to the named entity is found based on the public data, provide a first user interface for querying a user about a category, to which desired information belongs, from among the plurality of categories; and
obtain the execution information corresponding to a category selected by a user input to the first user interface.

7. The electronic device of one of claims 1 to 6, wherein the instructions, when executed by the processor, cause the electronic device to:
when a plurality of categories corresponding to the named entity is found based on the public data, and a category among the plurality of categories is capable of being specified based on the personal data, obtain the execution information corresponding to the specified category.

8. The electronic device of one of claims 1 to 7, wherein the instructions, when executed by the processor, cause the electronic device to:
when there is no data found from the database based on the named entity, provide a second user interface including an intent list thus popularly used; and
perform an action corresponding to an intent selected from the intent list by a user input on the second user interface.

9. The electronic device of one of claims 1 to 8, wherein the instructions, when executed by the processor, cause the electronic device to:
when the text is composed of one named entity, determine whether a domain or intent is capable of being specified based on the text;
when the domain or the intent is incapable of being specified, specify the domain or the intent by using the obtained execution information; and
perform an action corresponding to the voice command based on the specified domain or the specified intent.

10. The electronic device of one of claims 1 to 9, further comprising:
an input device (1150;1260;1270),
wherein the instructions, when executed by the processor, cause the electronic device to:
receive a user input for specifying a domain, in which an action is to be performed on at least one named entity, or intent in the domain through the input device; and
when a voice command including one of the at least one named entity is received based on the received user input, perform an action corresponding to the voice command depending on the specified domain or the specified intent.

11. The electronic device of one of claims 1 to 10, wherein the instructions, when executed by the processor, cause the electronic device to:
when an action performed by execution of the voice command corresponds to the intent of a user of the electronic device, store information used to execute the voice command as the personal data, and
wherein the information used to execute the voice command includes at least one of the named entity, a category corresponding to the named entity, the number of times that the named entity is uttered, a domain in which an action is performed, or an intent corresponding to the action performed in the domain.

12. The electronic device of one of claims 1 to 11, wherein the memory stores at least one application, and
wherein the instructions, when executed by the processor, cause the electronic device to:
on a basis of a named entity usage history in the at least one application, associate a named entity extracted from a named entity usage history in each application with a domain corresponding to each application or intent in which the extracted named entity is used, and store the associated result in a database.

13. An operating method of an electronic device (101;602;702;802;901;1101;1201), the method comprising:
receiving a voice command through a microphone (110; 1150; 1270) of the electronic device;
determining whether a text corresponding to the voice command is composed of one named entity;
when the text is composed of one named entity, obtaining execution information for executing a voice command based on the named entity, wherein the execution information includes domain information indicating an application for executing the voice command, or intent information indicating a function of the application requested by the voice command; and
executing the voice command using the execution information.

14. The method of claim 13, wherein the obtaining of the execution information is performed when the text is composed of one named entity, and there are two or more domains corresponding to the named entity,
further comprising:
when the text is composed of one named entity, and there is a domain corresponding to the named entity,
determining intent in the domain; and
performing a function corresponding to the determined intent.

15. The method of one of claims 13 and 14, further comprising:
when the text is not composed of one named entity, determining intent through natural language processing for the text and performing a function corresponding to the determined intent.
